# EUROPÄISCHE PATENTSCHRIFT

(11) **EP 2 496 654 B1**
(45) Veröffentlichungstag und Bekanntmachung des Hinweises auf die Patenterteilung: **02.04.2014**
(21) Anmeldenummer: 10779265.7
(22) Anmeldetag: 02.11.2010
(51) Int. Cl.: C09J 11/06

(54) **KLEB- UND DICHTSTOFFE ENTHALTEND ESTER AUF BASIS VON 2-PROPYLHEPTANOL**
ADHESIVES AND SEALANTS COMPRISING ESTER BASED ON 2-PROPYLHEPTANOL
ADHÉSIFS ET MATÉRIAUX D'ÉTANCHÉITÉ CONTENANT UN ESTER À BASE DE 2-PROPYLHEPTANOL

(30) Priorität: 05.11.2009 EP 09175122
(43) Veröffentlichungstag der Anmeldung: 12.09.2012
(73) Patentinhaber: BASF SE, 67056 Ludwigshafen (DE)
(72) Erfinder: WAGNER, Jochen, 66957 Ruppertsweiler (DE); BREITSCHEIDEL, Boris, 67117 Limburgerhof (DE); AUSTERMANN, Tobias, 48153 Münster (DE); MACK, Helmut, 83278 Traunstein (DE)
(86) Internationale Anmeldenummer: PCT/EP2010/066575
(87) Internationale Veröffentlichungsnummer: WO 2011/054782

(56) Entgegenhaltungen:
- EP-A1- 1 508 602
- EP-A1- 2 248 837
- DE-A1-102005 021 017
- Anonymous: "Palatinol N Diisononyl Phthalate", Technical Data Sheet, Februar 2001 (2001-02), Seiten 1-2, XP002628398, Gefunden im Internet: URL:http://www2.basf.us/plasticizers/pdfs/ pal-n.pdf [gefunden am 2011-03-16]
- HEIDRUN GOTH: "Für weiches Spielzeug und sichere Medizinversorgung- Neue BASF-Weichmacher kommen Anwendern entgegen", PRESSE-INFORMATION BASF AKTIENGESELLSCHAFT, 4. Juli 2007 (2007-07-04), Seiten 1-5, XP002628399, Ludwigshafen

## Beschreibung

Die vorliegende Erfindung betrifft Kleb- und Dichtstoffe auf Basis spezieller Bindemittel enthaltend mindestens einen Ester auf Basis von 2-Propylheptanol, ein Verfahren zu deren Herstellung sowie deren Verwendung.

Kleb- und Dichtstoffe auf Basis von Polyurethanen, Polyharnstoffen, Polyacrylaten, wässrigen Polyacrylaten, Silikonen, Polysulfiden, silylierten Polyurethanen, silylierten Polyharnstoffen, silylierten Polyethern, silylierten Polysulfiden und silyl-terminierten Acrylaten weisen ein sehr breites Anwendungsspektrum auf und werden in an den jeweiligen Einsatzzweck angepassten Formulierungen eingesetzt, beispielsweise im Hoch- und Tiefbau, in der Flugzeug- oder Fahrzeugindustrie und im Schiffbau. Eine wesentliche Komponente dieser Formulierung sind in der Regel Weichmacher, welche einen Anteil von über 40% der Gesamtformulierung ausmachen können. Bei Weichmachern handelt es sich gemäß DIN 55945 um flüssige und feste indifferente organische Substanzen mit geringem Dampfdruck. Aufgrund ihres Löse- und Quellvermögens verringern sie die Härte des Polymeren, kompatibilisieren das Füllstoff/PolymerGemisch und erhöhen die Tieftemperaturelastizität. Insbesondere dienen Weichmacher in Kleb- und Dichtstoffen auch zur Erhöhung der Dehnbarkeit des erzeugten Films.

DE-A 102005021017 offenbart Bauklebstoffe, enthaltend wenigstens ein Silicium enthaltendes Copolymer von C₁-C₂₀-Alkyl(meth)acrylaten und wenigstens ein ethylenisch ungesättigtes Säureanhydrid oder eine ethylenisch ungesättigte Dicarbonsäure, deren Carbonsäuregruppen eine Anhydridgruppe bilden können oder Gemische davon oder wenigstens eines eine Isocyanatgruppe enthaltenden radikalisch polymerisierbaren Monomers. Die Klebstoffe können 0 bis 60 Gew.-% eines Weichmachers enthalten, beispielsweise Diisononylphthalat (Palatinol® N).

EP-A 1508602 betrifft Montagekleber auf Basis wässriger Acrylat-Dispersionen, die 0 bis 40 Gew.-% Weichmacher enthalten können. Als Weichmacher werden u.a. allgemein Phthalate genannt. In den Anwendungsbeispielen von EP-A 1508602 werden keine Weichmacher verwendet.

Beispiel 3 von EP-A 2248837 beschreibt die Herstellung eines Konstruktionsklebstoffs aus einem Präpolymer, das durch die Umsetzung eines Hexamethylen-1,6-diisocyanats mit Biuretstrukturen und 3-(Diethoxymethylsilyl)propylamins hergestellt wurde. Als Weichmacher wird in diesem Klebstoff Bis(2-propyheptyl)phthalat verwendet.

WO 2007/093381 betrifft einkomponentige, lösungsmittelfreie Kontaktklebstoffe auf Basis von Mischungen aus silan-terminierten Polyoxyalkylenen und silan-terminierten Polyalkylacrylaten oder -methacrylaten, die auch Weichmacher als Zusatzstoff enthalten können. Als geeignete Weichmacher werden in der Beschreibung generisch Phthalsäureester, Cyclohexandicarbonsäureester oder Polypropylenoxid genannt, in den Beispielen wird allein Diisodecylphthalat als Weichmacher verwendet.

WO 2008/027463 betrifft selbsthärtende Dichtmittelzusammensetzungen aus Acrylpolymeren, Polyurethanen, Polyharnstoffen und/oder silan-modifizierten Polymeren, die mindestens ein C₄- bis C₈-Alkylterephthalat enthalten.

Kleb- und Dichtstoffe sollen möglichst gute Verarbeitungseigenschaften haben, d.h. sie sollen ohne größeren Kraftaufwand aufgetragen werden können. Außerdem sollen sie nach der Vernetzung hohe Dehnungen erzielen und eine geringe Shore A Härte aufweisen.

Da mit den genannten Verbindungen bzw. Verfahren das grundlegende Problem der Optimierung der Eigenschaften von Kleb- und Dichtstoffen auf Basis von Polyurethanen, Polyharnstoffen, Polyacrylaten, wässrigen Polyacrylaten, Silikonen, Polysulfiden, silylierten Polyurethanen, silylierten Polyethern, silylierten Polysulfiden und silyl-terminierten Acrylaten noch immer nicht endgültig gelöst ist, lag der vorliegenden Erfindung die Aufgabe zugrunde, weitere kostengünstige Formulierungen auf Basis dieser Polymere zu entwickeln. Die Kleb- und Dichtstoffe sollten hierbei eine geringere Härte sowie verbesserte Fließeigenschaften aufweisen und zugleich höhere Zugfestigkeiten erzielen.

Erfindungsgemäß gelöst wurde die Aufgabe durch Kleb- oder Dichtstoffe enthaltend (A) mindestens eine Verbindung ausgewählt aus der Gruppe der Polyurethane, Polyharnstoffe, Polyacrylate, wässrigen Polyacrylaten, Silikonen, Polysulfide, silylierten Polyurethane, silylierten Polyether, silylierten Polysulfide und silyl-terminierten Acrylate und (B) mindestens einen Ester einer aliphatischen oder aromatischen Di- oder Tricarbonsäure mit einer C₁₀-Alkoholkomponente enthaltend 2-Propylheptanol oder ein C₁₀-Alkoholgemisch aus 2-Propylheptanol und mindestens einem der C₁₀-Alkohole 2-Propyl-4-methyl-hexanol, 2-Propyl-5-methyl-hexanol, 2-Isopropyl-heptanol, 2-Isopropyl-4-methyl-hexanol, 2-Isopropyl-5-methyl-hexanol und/oder 2-Propyl-4,4-dimethylpentanol, wobei die aliphatische oder aromatische Di- oder Tricarbonsäure ausgewählt ist aus der Gruppe bestehend aus Zitronensäure, Phthalsäure, Isophthalsäure, Terephthalsäure und Trimellitsäure, wobei der Kleb- oder Dichtstoff keinen Benzoesäureisononylester enthält. Überraschend wurde gefunden, dass die erfindungsgemäßen Kleb- und Dichtstoffe, im Vergleich zum Stand der Technik, geringere Härten sowie niedrige Fließpunkte aufweisen. Weiterhin wurde eine verbesserte Dehnung der Kleb- und Dichtstoffe beobachtet.

Die vorliegende Erfindung betrifft somit einen Kleb- oder Dichtstoff auf Basis von speziellen Bindemitteln enthaltend mindestens einen Ester auf Basis von 2-Propylheptanol, ein Verfahren zur Herstellung dieser Kleb- und Dichtstoffe, sowie deren Verwendung.

Erfindungsgemäß enthält der Kleb- oder Dichtstoff als Komponente (B) Ester einer aliphatischen oder aromatischen Di- oder Tricarbonsäure mit einer C₁₀-Alkoholkomponente enthaltend 2-Propylheptanol oder ein C₁₀-Alkoholgemisch aus 2-Propylheptanol und mindestens einem der C₁₀-Alkohole 2-Propyl-4-methyl-hexanol, 2-Propyl-5-methyl-hexanol, 2-Isopropyl-heptanol, 2-Isopropyl-4-methyl-hexanol, 2-Isopropyl-5-methyl-hexanol und/oder 2-Propyl-4,4-dimethylpentanol, wobei die aliphatische oder aromatische Di- oder Tricarbonsäure ausgewählt ist aus der Gruppe bestehend aus Zitronensäure, Phthalsäure, Isophthalsäure, Terephthalsäure und Trimellitsäure.

Die Verwendung des Ausdrucks "Alkoholkomponente" trägt dem Umstand Rechnung, dass in den erfindungsgemäßen C₁₀-Estergemischen die genannten C₁₀-Alkohole in veresterter Form vorliegen.

Die C₁₀-Alkoholkomponente der erfindungsgemäßen C₁₀-Estergemische enthält im wesentlichen 2-Propylheptanol oder Gemische des 2-Propylheptanols mit einem oder mehreren seiner Isomeren 2-Propyl-4-methyl-hexanol, 2-Propyl-5-methyl-hexanol, 2-Isopropyl-heptanol, 2-Isopropyl-4-methyl-hexanol, 2-Isopropyl-5-methyl-hexanol und/ oder 2-Propyl-4,4-dimethylpentanol. Diese Verbindungen werden nachstehend zur Abkürzung als "Propylheptanol-Isomere" bezeichnet. Die Anwesenheit anderer Isomere der 2-Propylheptanol-Komponente - beispielsweise von den zu 2-Propylheptanol isomeren Alkoholen 2-Ethyl-2,4-dimethylhexanol, 2-Ethyl-2-methyl-heptanol und/oder 2-Ethyl-2,5-dimethylhexanol herrührend - in der erfindungsgemäßen C₁₀-Alkoholkomponente ist möglich. Aufgrund der geringen Bildungsraten der aldehydischen Vorläufer dieser Isomere im Zuge der Aldolkondensation sind diese, wenn überhaupt, nur in Spuren in der C₁₀-Alkoholkomponente enthalten und spielen für die Weichmachereigenschaften der die erfindungsgemäße C₁₀-Alkoholkomponente enthaltenden Weichmacher praktisch keine Rolle.

Reines 2-Propylheptanol kann durch Aldolkondensation von n-Valeraldehyd und nachfolgende Hydrierung des dabei erhaltenen 2-Propylheptenal, beispielsweise gemäß US-A 2,921,089, erhalten werden. Vorzugsweise werden jedoch Mischungen des 2-Propylheptanols mit einem oder mehreren der vorstehend genannten Propylheptanol-Isomeren als Ausgangsalkohol für die C₁₀-Alkoholkomponente der erfindungsgemäßen Estergemische verwendet. Die Isomerenzusammensetzung in den zur Herstellung der erfindungsgemäßen Estergemische geeigneten 2-Propylheptanol-Zusammensetzungen kann je nach Art der Herstellung dieser Zusammensetzungen und der Art des verwendeten Ausgangsmaterials schwanken und zwar sowohl bezüglich des Gehaltes an einzelnen Isomeren als auch bezüglich des Vorhandenseins bestimmter Isomere. Als Ausgangsmaterial zur Herstellung von 2-Propylheptanol können verschiedene Kohlenwasserstoffquellen benutzt werden, beispielsweise 1-Buten, 2-Buten, Raffinat I - ein aus dem C₄-Schnitt eines Crackers nach Abtrennung von Acetylen und Dienen erhaltenes Alkan/Alken-Gemisch, das neben 1- und 2-Buten noch erhebliche Mengen an Isobuten enthält - oder Raffinat II, das aus Raffinat I durch Abtrennung von Isobuten erhalten wird und als Olefinkomponenten außer 1- und 2-Buten nur noch geringe Anteile an Isobuten enthält. Selbstverständlich können auch Gemische aus Raffinat I und Raffinat II als Rohstoff zur 2-Propylheptanol-Herstellung verwendet werden. Diese Olefine oder Olefingemische können nach an sich herkömmlichen Methoden mit Kobalt- oder Rhodium-Katalysatoren hydroformyliert werden, wobei aus 1-Buten ein Gemisch aus n- und iso-Valeraldehyd - die Bezeichnung iso-Valeraldehyd bezeichnet im Rahmen dieser Anmeldung die Verbindung 2-Methylbutanal - gebildet wird, dessen n/iso-Verhältnis je nach verwendetem Katalysator und Hydroformylierungsbedingungen in relativ weiten Grenzen variieren kann. Beispielsweise wird bei Verwendung eines mit Triphenylphosphin modifizierten homogenen Rhodium-Katalysators (Rh/TPP) aus 1-Buten n- und iso-Valeraldehyd in einem n/iso-Verhältnis von im Allgemeinen 10:1 bis 20:1 gebildet, wohingegen bei Verwendung von mit Phosphit-Liganden, beispielsweise gemäß EP-A 155 508 oder EP-A 213 639, oder von mit Phosphoamidit-Liganden, beispielsweise gemäß WO 02/83695, modifizierten Rhodium-Hydroformylierungskatalysatoren fast ausschließlich n-Valeraldehyd gebildet wird. Während das Rh/TPP-Katalysatorsystem 2-Buten bei der Hydroformylierung nur sehr langsam umsetzt, so dass der größte Teil des 2-Butens aus dem Hydroformylierungsgemisch wieder zurückgewonnen werden kann, gelingt die Hydroformylierung des 2-Butens mit den erwähnten Phosphit-Ligand- oder Phosphoramidit-Ligand-modifizierten Rhodium-Katalysatoren, wobei vorwiegend n-Valeraldehyd gebildet wird. Hingegen wird im olefinischen Rohstoff enthaltenes Isobuten, wenn auch mit unterschiedlicher Geschwindigkeit, von praktisch allen Katalysatorsystemen zu 3-Methylbutanal und je nach Katalysator in geringerem Umfang zu Pivalaldehyd hydroformyliert.

Die je nach verwendeten Ausgangsmaterialien und Katalysatoren erhaltenen C₅-Aldehyde, d.h. n-Valeraldehyd gegebenenfalls im Gemisch mit iso-Valeraldehyd, 3-Methylbutanal und/oder Pivalaldehyd, können vor der Aldolkondensation gewünschtenfalls vollständig oder teilweise destillativ in die Einzelkomponenten aufgetrennt werden, so dass auch hier eine Möglichkeit besteht, die Isomerenzusammensetzung der C₁₀-Alkoholkomponente der erfindungsgemäßen Estergemische zu beeinflussen und zu steuern. Desgleichen ist es möglich, das C₅-Aldehydgemisch, wie es bei der Hydroformylierung gebildet wird, ohne die vorherige Abtrennung einzelner Isomere der Aldolkondensation zuzuführen. Bei der Aldolkondensation, die mittels eines basischen Katalysators, wie Natrium- oder Kaliumhydroxid, beispielsweise nach den in EP-A 366 089, US-A 4 426 524 oder US-A 5 434 313 beschriebenen Verfahren durchgeführt werden kann, entsteht bei Einsatz von n-Valeraldehyd als einziges Kondensationsprodukt 2-Propylheptenal, wohingegen bei Einsatz eines Gemisches isomerer C₅-Aldehyde ein Isomerengemisch aus den Produkten der Homoaldolkondensation gleicher Aldehydmoleküle und der gekreuzten Aldolkondensation unterschiedlicher Isomere geformt wird. Selbstverständlich kann die Aldolkondensation durch die gezielte Umsetzung einzelner Isomere so gesteuert werden, dass überwiegend oder vollständig ein einzelnes Aldolkondensationsisomer gebildet wird. Die betreffenden Aldolkondensationsprodukte können anschließend, üblicherweise nach vorausgegangener, vorzugsweise destillativer Abtrennung aus der Reaktionsmischung und gewünschtenfalls destillativer Reinigung, mit herkömmlichen Hydrierkatalysatoren zu den entsprechenden Alkoholen oder Alkoholgemischen hydriert werden, die dann als Ausgangsalkohole für die C₁₀-Alkoholkomponente bei der Herstellung der erfindungsgemäßen Estergemische dienen.

Dem so hergestellten 2-Propylheptanol bzw. seinem Gemisch mit den Propylheptanol-Isomeren können vor der Veresterung mit einer aromatischen oder aliphatischen Dioder Tricarbonsäure gewünschtenfalls noch andere C₁₀-Alkohole, beispielsweise n-Decanol, Methylnonanole, Dimethyloctanole, Ethyloctanole, Trimethylheptanole, Methylethylheptanole, Butylhexanole, Methylpropylhexanole, Methylisopropylhexanole, Dimethylethylhexanole, Tetramethylhexanole, Methylbutylpentanole, Methylisobutylpentanole, Dimethylpropylpentanole, Dimethylisopropylpentanole, Trimethylethylpentanole und Pentamethylpentanole, zugemischt werden, bevorzugt wird das 2-Propylheptanol jedoch allein oder im Gemisch mit einem oder mehreren der Propylheptanol-Isomeren für die C₁₀-Alkoholkomponente der erfindungsgemäßen Estergemische verwendet.

Der Gehalt an 2-Propylheptanol in den zur Herstellung der erfindungsgemäßen Estergemische verwendeten, gegebenenfalls noch Propylheptanol-Isomere enthaltenden C₁₀-Alkohole kann bis zu 100 Gew.-% betragen und beträgt im Allgemeinen mindestens 50 Gew.-%, vorzugsweise 60 bis 98 Gew.-% und besonders bevorzugt 80 bis 95 Gew.-%, insbesondere 85 bis 95 Gew.-%.

Geeignete Mischungen von 2-Propylheptanol mit den Propylheptanol-Isomeren umfassen beispielsweise solche aus 60 bis 98 Gew.-% 2-Propylheptanol, 1 bis 15 Gew.-% 2-Propyl-4-methyl-hexanol und 0,01 bis 20 Gew.-% 2-Propyl-5-methyl-hexanol und 0,01 bis 24 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Weitere geeignete Mischungen aus 2-Propylheptanol mit den Propylheptanol-Isomeren umfassen beispielsweise solche aus 75 bis 95 Gew.-% 2-Propylheptanol, 2 bis 15 Gew.-% 2-Propyl-4-methyl-hexanol, 1 bis 20 Gew.-% 2-Propyl-5-methyl-hexanol, 0,1 bis 4 Gew.-% 2-Isopropylheptanol, 0,1 bis 2 Gew.-% 2-Isopropyl-4-methylhexanol und 0,1 bis 2 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen von 2-Propylheptanol mit den Propylheptanol-Isomeren umfassen solche mit 85 bis 95 Gew.-% 2-Propylheptanol, 6 bis 12 Gew.-% 2-Propyl-4-methyl-hexanol und 0,1 bis 2 Gew.-% 2-Propyl-5-methylhexanol und 0,01 bis 1 Gew.-% 2-Isopropylheptanol, wobei die Summe der Anteile der einzelnen Bestandteile 100 Gew.-% nicht überschreitet. Bevorzugt addieren sich die Anteile der einzelnen Bestandteile zu 100 Gew.-%.

Bevorzugte Mischungen aus 2-Propylheptanol mit den Propylheptanol-Isomeren umfassen weiterhin beispielsweise solche aus 80 bis 92 Gew.-% 2-Propylheptanol, 6 bis 12 Gew.-% 2-Propyl-4-methyl-hexanol, 7 bis 13 Gew.-% 2-Propyl-5-methyl-hexanol, 0,1 bis 2 Gew.-% 2-Isopropylheptanol, 0,1 bis 1 Gew.-% 2-Isopropyl-4-methyl-hexanol und 0,1 bis 1 Gew.-% 2-Isopropyl-5-methyl-hexanol, wobei die Summe der Anteile der einzelnen Bestandteile 100 Gew.-% nicht überschreitet. Bevorzugt addieren sich die Anteile der einzelnen Bestandteile zu 100 Gew.-%.

Die Zusammensetzung der C₁₀-Alkoholkomponente in den erfindungsgemäßen Estergemischen entspricht praktisch der Zusammensetzung der zu ihrer Herstellung bei der Veresterung verwendeten Propylheptanol-Isomerengemische.

Die Mischungen aus 2-Propylheptanol mit den Propylheptanol-Isomeren können als Verunreinigungen bedingt durch das Herstellverfahren, in Spuren noch n-Pentanol, 2-Methylbutanol und/oder 3-Methylbutanol enthalten. Die Gehalte an diesen Alkoholen liegen im Allgemeinen bei jeweils max. 0,5 %.

Die aromatische oder aliphatische Di- oder Tricarbonsäurekomponente der erfindungsgemäßen Estergemische kann Zitronensäure, Phthalsäure, Isophthalsäure, Terephthalsäure oder Trimellitsäure sein. Im Allgemeinen enthalten die erfindungsgemäßen Estergemische jeweils nur eine der genannten Di- oder Tricarbonsäuren als Carbonsäurekomponente. Besonders bevorzugt sind die Ester der Phthalsäure. Alle diese Di- und Tricarbonsäuren sowie die Anhydride der Phthalsäure und der Trimellitsäure werden industriell produziert und sind im Handel erhältlich.

Zur Herstellung der erfindungsgemäßen C₁₀-Estergemische können die C₁₀-Alkohole auf an sich herkömmliche Weise, beispielsweise unter Protonsäure-Katalyse, vorzugsweise unter Schwefelsäurekatalyse, oder besonders bevorzugt unter amphoterer Titan- oder Zirkonium- oder Zinn-tetraalkoholat-Katalyse im stöchiometrischen Überschuss mit der betreffenden Di- oder Tricarbonsäure bzw. deren Anhydrid bei Temperaturen von 80 bis 250°C, vorzugsweise von 100 bis 240°C, insbesondere bei Temperaturen von 150 bis 230°C, bei Atmosphärendruck oder vorzugsweise vermindertem Druck und im Allgemeinen destillativer Ausschleusung des Reaktionswassers zwecks Vervollständigung des Umsatzes der Veresterungsreaktion, verestert werden. Nach Neutralisation bzw. Hydrolyse und Abtrennung des Veresterungskatalysators, beispielsweise in Phasenabscheidern oder durch Filtration oder Zentrifugation, können die so hergestellten Estergemische beispielsweise durch Destillation von Verunreinigungen wie Wasser oder nicht umgesetztem Alkohol, abgetrennt werden. Eine ausführliche Darstellung der Durchführung eines solchen Veresterungsverfahrens wird für die Herstellung von Phthalsäureestern von Towae et al. in Ullmann's Encyclopedia of Industrial Chemistry, 5th Ed., Vol. A20, S. 193 -196, VCH Publishers, Weinheim 1992, gegeben; diese ist aber grundsätzlich auch analog auf die Herstellung anderer Di- oder Tricarbonsäureester anwendbar. Detaillierte Darstellungen zur Durchführung von Veresterungsverfahren finden sich beispielsweise auch in WO 02/038531, US-B1 6 310 235, US-A 5 324 853, DE-A 2 612 355 (Derwent Abstract Nr. DW 77-72638 Y) oder DE-A 1 945 359 (Derwent Abstract Nr. DW 73-27151 U).

Die erfindungsgemäßen Estergemische haben je nach Zusammensetzung im Allgemeinen eine Dichte bei 20°C von 0,90 g/cm³ bis 1,00 g/cm³, vorzugsweise von 0,95 g/cm³ bis 0,98 g/cm³ und besonders bevorzugt von 0,96 g/cm³ bis 0,97 g/cm³, gemessen nach DIN 51757 oder ASTM D-4052 und eine dynamische Viskosität bei 20°C von 60 mPa*s bis 200 mPa*s, vorzugsweise von 100 mPa*s bis 150 mPa*s und besonders bevorzugt von 110 mPa*s bis 140 mPa*s, gemessen nach DIN 51562 oder ASTM D445.

Bevorzugt handelt es sich bei der Komponente (B) um einen Phthalsäureester isomerer C₁₀-Alkohole.

In der vorliegenden Anmeldung wird unter dem Begriff Kleb- und Dichtstoffe jede Zusammensetzung verstanden, durch welche eine Verbindung zwischen zwei oder mehreren Gegenständen oder Körpern hergestellt werden kann oder welche sich zum Verfüllen von Öffnungen, Nahtstellen oder Räumen in, an oder zwischen einem oder mehreren Gegenständen oder Körpern eignen (bspw. Rillen, Löcher, Risse, Fugen, Räume zwischen benachbarten oder überlappenden Gegenständen, Poren und Nähten). So werden Dichtstoffe bspw. für das Verfüllen von Räumen verwendet, welche durch benachbarte oder überlappende Strukturen vorgegeben sind, wie etwa Fenster- und Sanitärfugen oder Fugen im Fahrzeug-, Flugzeug- oder Schiffbau, sowie Hoch-, Tiefbau- und Fußbodenfugen. In speziellen Ausführungsformen können die Dichtstoffe auch dazu verwendet werden, Oberflächen zu glätten oder als Abdichtmasse das Ein- oder Austreten von Feuchtigkeit, Chemikalien oder Gasen durch die genannten Öffnungen, Fugen oder Hohlräume zu verhindern, wobei die vorgenannten Eigenschaften keine notwendigen Merkmale der genannten Kleb- und Dichtstoffe darstellen. Kleb- und Dichtstoffe härten bei oder nach der Anwendung durch chemische oder physikalische Vorgänge einer oder mehrerer Komponenten der Zusammensetzung aus.

In speziellen Ausführungsformen der vorliegenden Erfindung handelt es sich um selbsthärtende Kleb- und Dichtstoffe. Hierunter wird verstanden, dass die Zusammensetzungen nach Applikation härten, ohne dass dabei für den Aushärtungsprozess ein Einwirken von außen notwendig wäre, wie etwa Erwärmen oder Bestrahlen. In weiteren Ausführungsformen kann es sich um Emulsionen eines oder mehrerer Polymere in Wasser oder anderen Lösungsmitteln handeln (bspw. Polyacrylate), welche beim Trocknen auf physikalische Weise aushärten. Weiterhin ist es aber auch möglich, dass die eingesetzten Prepolymere durch die Umgebungsfeuchtigkeit polymerisieren, was bspw. bei den isocyanat-terminierten Polyurethanen oder isocyanat-terminierten Polyharnstoff-Prepolymeren der Fall ist. Bei den erfindungsgemäßen Kleb- und Dichtstoffen kann es sich auch um Zwei- oder Mehrkomponenten-Systeme handeln, welche kurz vor oder während der Applikation miteinander in Kontakt gebracht und/oder miteinander vermischt werden, wobei die so ausgelöste Reaktion zu einer Härtung des Systems führt (bspw. Zweikomponenten-Polyurethan- oder -Polyharnstoff-Systeme).

Bei denen als Komponente A) eingesetzten Polymeren handelt es sich allgemein um Produkte, welche durch die Polymerisation mindestens eines Monomertyps erhalten wurden. Enthalten die Polymere zwei oder mehr Monomertypen, können diese Monomere in jeder Form im Polymer angeordnet sein, d. h. sie können entweder statistisch verteilt oder in Blöcken vorliegen. Es ist erfindungswesentlich, dass als Komponente (A) mindestens ein Polymer aus der Gruppe der Polyurethane, Polyharnstoffe, Polyacrylate, wässrigen Polyacrylaten, Silikonen, Polysulfide, silylierten Polyurethane, silylierten Polyether, silylierten Polysulfide und silyl-terminierten Acrylate eingesetzt wird.

Die Polyurethane und Polyharnstoffe sind aus mindestens einer Polyol- bzw. Polyamin-Komponente sowie einer Polyisocyanatkomponente aufgebaut und können optional Kettenverlängerer enthalten.

Die Herstellungsweise der Polyurethan- oder Polyharnstoff-Prepolymere ist für die vorliegende Erfindung nicht kritisch. Es kann sich somit um einen einstufigen Prozess handeln, wobei die Polyole und/oder Polyamine, Polyisocyanate und Kettenverlängerer gleichzeitig miteinander zur Reaktion gebracht werden, was bspw. in einer Batch-Reaktion geschehen kann, oder es kann sich um einen zweistufigen Prozess handeln, in dem bspw. zunächst ein Prepolymer gebildet wird, welches im Anschluss mit Kettenverlängerern zur Reaktion gebracht wird.

Die Polyurethane oder Polyharnstoffe können auch noch weitere Struktureinheiten enthalten, insbesondere kann es sich hierbei um Allophanate, Biuret, Uretdion oder Cyanurate handeln. Die vorgenannten Gruppen sind allerdings nur Beispiele, wobei die erfindungsgemäßen Polyurethane und Polyharnstoffe auch weitere Struktureinheiten enthalten können. Auch der Grad der Verzweigung ist für die vorliegende Erfindung unkritisch, so dass sowohl lineare als auch hochverzweigte Polymere eingesetzt werden können.

In einer bevorzugten Ausführungsform der Erfindung beträgt das molare Verhältnis der im Polymer enthaltenen Isocyanat-Komponente zu der Summe der Polyol- bzw. Polyamin-Komponente 0,01 bis 50, bevorzugt 0,5 bis 3,0.

Bei der Isocyanat-Komponente handelt es sich bevorzugt um eine aliphatische, cycloaliphatische, araliphatische und/oder aromatische Verbindung, bevorzugt um ein Diisocyanat oder Triisocyanat, wobei es sich auch um Mischungen dieser Verbindungen handeln kann. Hierbei ist es als bevorzugt anzusehen, dass es sich um Hexamethylendiisocyanat-1,6 (HDI), HDI Uretdion, HDI Isocyanurat, HDI Biuret, HDI Allophanat, 1-Isocyanato-3,3,5-trimethyl-5-isocyanatomethylcyclohexan (IPDI), 2,4- und/oder 2,6-Toluylendiisocyanat (TDI) und/oder 4,4'-, 2,4'- und/oder 2,2'-Diphenylmethandiiso cyanat (MDI), Polymeres MDI, Carbodiimid-modifiziertes 4,4'-MDI, m-Xylendiisocyanat (MXDI), m- oder p-Tetramethylxylendiisocyanat (m-TMXDI, p-TMXDI), 4,4'-Dicyclohexylmethandiisocyanat (H12MDI), Naphthalin-1,5-Diisocyanat, Cyclohexan-1,4-diisocyanat, hydriertes Xylylen-diisocyanat (H6XDI), 1-Methyl-2,4-diisocyanato-cyclohexan, Tetramethoxybutan-1,4-diisocyanat, Butan-1,4-diisocyanat, 1,6-Diisocyanato-2,2,4-trimethylhexan, 1,6-Diisocyanato-2,4,4-trimethylhexan, 1-Isocyanato-1-methyl-4(3)-isocyanatomethylcyclohexan (IMCI) sowie 1,12-Dodecandiisocyanat (C12DI) handelt. Weiterhin kann es sich um 4-Dichlorophenyl diisocyanat, Dicyclohexylmethan-4,4'-diisocyanat, m-Phenylendiisocyanat, p-Phenylendiisocyanat, 4-Chloro-1,3-phenylendiisocyanat, 1,6-Hexamethylendiisocyanat, 1,10-Decamethylendiisocyanat, Lysinalkylesterdiisocyanat, 3,3'-Dimethyl-4,4'-diphenylmethandiisocyanat, Xylylendiisocyanat, Tetramethylxylylendiisocyanat, 1,5-Tetrahydronaphthalendiisocyanat, Triisocyana-totoluol, Methylenbis(cyclohexyl)-2,4'-diisocyanat und 4-Methylcyclohexan-1,3-diisocyanat handeln. Insbesondere sind Polyisocyanate mit zwei oder drei Isocyanatgruppen pro Molekül geeignet. Es kann sich aber auch um Mischungen von Polyisocyanaten handeln, wobei die durchschnittliche NCO-Funktionalität der Isocyanatkomponente in der Mischung insbesondere bei 2,1 bis 2,3, 2,2 bis 2,4, 2,6 bis 2,8 oder 2,8 bis 3,0 liegen kann. Derivatisierte Polyisocyanate können ebenfalls verwendet werden, beispielsweise sulfonierte Isocyanate, blockierte Isocyanate, Isocyanurate und Biuret-Isocyanate.

Bei der Polyol- bzw. Polyamin-Komponente handelt es sich bevorzugt um Polyetheresterpolyol, Fettsäureesterpolyole, Polyetherpolyole, Polyesterpolyole, Polybutadienepolyole und Polycarbonatpolyole, wobei es sich auch um Mischungen dieser Verbindungen handeln kann. Die Polyole und/oder Polyamine enthalten bevorzugt zwischen zwei und 10, besonders bevorzugt zwischen zwei und drei Hydroxylgruppen und/oder Aminogruppen und besitzen ein gewichtsmittleres Molekulargewicht zwischen 32 und 30000, besonders bevorzugt zwischen 90 und 18000 g/mol. Als Polyole eignen sich vorzugsweise die bei Raumtemperatur flüssigen, glasartig fest/amorphen oder kristallinen Polyhydroxyverbindungen. Als typische Beispiele wären difunktionelle Polypropylenglykole zu nennen. Es können auch bevorzugt Hydroxylgruppen aufweisende statistische Copolymere und/oder Blockcopolymere des Ethylenoxids und Propylenoxids eingesetzt werden. Geeignete Polyetherpolyole sind die in der Polyurethanchemie an sich bekannten Polyether, wie die unter Verwendung von Startermolekülen hergestellten Polyole mittels KOH- oder DMC- Katalyse aus Styroloxid, Ethylenoxid, Propylenoxid, Butylenoxid, Tetrahydrofuran oder Epichlorhydrin.

Konkret eignen sich insbesondere auch Poly(oxytetramethylen)glykol (Poly-THF), 1,2-Polybutylenglykol, oder deren Mischungen. Insbesondere geeignet sind Polypropylenoxid, Polyethylenoxid und Butylenoxid und deren Mischungen. Ein weiterer als Polyolkomponente einsetzbarer Copolymertyp, der endständig Hydroxylgruppen aufweist, ist gemäß der allgemeinen Formel (herstellbar z.B. mittels "Controlled" High-Speed Anionic Polymerization gemäß Macromolecules 2004, 37, 4038-4043): 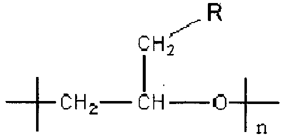
in welcher R gleich oder verschieden ist und bevorzugt durch OMe, OiPr, Cl oder Br repräsentiert wird.

Weiterhin eignen sich als Polyol-Komponente insbesondere die bei 25°C flüssigen, glasartig amorphen oder kristallinen Polyesterdi- bzw. polyole, die durch Kondensation von Di- oder Tricarbonsäuren, wie Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure und/oder Dimerfettsäure, mit niedermolekularen Diolen, Triolen oder Polyolen, wie Ethylenglykol, Propylenglykol, Diethylenglykol, Triethylenglykol, Dipropylenglykol, 1,4-Butandiol, 1,6-Hexandiol, 1,8-Octandiol, 1,10-Decandiol, 1,12-Dodecandiol, Dimerfettalkohol, Glycerin, Pentaerythritol und/ oder Trimethylolpropan, herstellbar sind.

Eine weitere geeignete Gruppe der Polyole sind die Polyester z.B. auf der Basis von Caprolacton, welche auch als "Polycaprolactone" bezeichnet werden. Weitere einsetzbare Polyole sind Polycarbonat-Polyole, Dimerfettalkohole und Dimerdiole sowie Polyole auf Basis pflanzlicher Öle und ihrer Derivate, wie Rizinusöl und dessen Derivate oder epoxidiertes Sojabohnenöl. Außerdem kommen Hydroxylgruppen aufweisende Polycarbonate in Frage, welche durch Reaktion von Kohlensäurederivaten, z. B. Diphenylcarbonat, Dimethylcarbonat oder Phosgen, mit Diolen erhältlich sind. Besonders eignen sich z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A, Glyzerin, Trimethylolpropan, 1,2,6-Hexantriol, 1,2,4-Butantriol, Trimethylolpropan, Pentaerythrit, Chinit, Mannit, Sorbit, Methylglykosid und 1,3,4,6-Dianhydrohexite. Auch die Hydroxyfunktionellen Polybutadiene, welche u.a. unter dem Handelsnamen "Poly-bd®" käuflich sind, können als Polyol-Komponente ebenso wie deren hydrierten Analoga dienen. Weiterhin kommen Hydroxy-funktionelle Polysulfide, welche unter dem Handelsnamen "Thiokol® NPS-282" vertrieben werden, sowie hydroxy-funktionelle Polysiloxane in Frage.

Als erfindungsgemäß einsetzbare Polyamin-Komponente eignen sich insbesondere Hydrazin, Hydrazinhydrat und substituierte Hydrazine, wie N-Methylhydrazin, N,N'-Dimethylhydrazin, Säurehydrazide der Adipinsäure, Methyladipinsäure, Sebacinsäure, Hydracrylsäure, Terephthalsäure, Isophthalsäure, Semicarbazidoalkylen-hydrazide, wie 13-Semicarbazidopropionsäurehydrazid, Semicarbazidoalkylen-carbazinester, wie z. B. 2-Semicarbazidoethyl-carbazinester und/ oder Aminosemicarbazid-Verbindungen, wie 13-Aminoethylsemicarbazidocarbonat. Weiterhin eignen sich zur Herstellung der Polyurethane und Polyharnstoffe Polyamine basierend auf Polyestern, Polyolefinen, Polyacetalen, Polythioethern, Polyethercarbonaten, Polyethyleneterephthalaten, Polyesteramiden, Polycaprolactamen, Polycarbonaten, Polycaprolactonen und Polyacrylaten, welche mindestens zwei Amingruppen aufweisen. Polyamine, z.B. solche, die unter dem Handelsnamen Jeffamine® (es handelt sich um Polyetherpolyamine) vertrieben werden, sind auch geeignet.

Als Polyol-Komponente und/oder Polyamin-Komponente kommen auch die als sogenannte Kettenverlänger bekannten Spezies in Frage, welche bei der Herstellung von Polyurethanen und Polyharnstoffen mit überschüssigen Isocyanatgruppen reagieren, normalerweise ein Molekulargewicht (Mn) von unter 400 aufweisen und häufig in Form von Polyolen, Aminopolyolen oder aliphatischen, cycloaliphatischen oder araliphatischen Polyaminen vorliegen.

Geeignete Kettenverlängerer sind beispielsweise:
- Alkandiole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, Cyclohexandimethanol, 2-Methyl-1,3-propandiol, Hexylenglykol, 2,5-Dimethyl-2,5-hexandiol, Ethylenglycol, 1,2- oder 1,3-Propandiol, 1,2-, 1,3- oder 1,4-Butanediol, 1,2-, 1,3-, 1,4- oder 1,5-Pentanediol, 1,2-, 1,3-, 1,4-, 1,5- or 1,6-Hexandiol, Neopentylhydroxypivalat, Neopentylglycol, Dipropyleneglycol, Diethylenglycol, 1,2-, 1,3- oder 1,4-Cyclohexandiol, 1,2-, 1,3- oder 1,4-Cyclohexandimethanol, Trimethylpentandiol, Ethylbutylpropandiol, Diethyloctandiole, 2-Butyl-2-ethyl-1,3-propandiol, 2-Butyl-2-methyl-1,3-propandiol, 2-Phenyl-2-methyl-1,3-propandiol, 2-Propyl-2-ethyl-1,3-propanediol, 2-Di-tert-butyl-1,3-propandiol, 2-Butyl-2-propyl-1,3-propandiol, 1-Dihydroxymethylbicyclo[2.2.1]heptan, 2,2-Diethyl-1,3-propanediol, 2,2-Dipropyl-1,3-propandiol, 2-Cyclohexyl-2-methyl-1,3-propandiol, 2,5-Dimethyl-2,5-hexanediol, 2,5-Diethyl-2,5-hexandiol, 2-Ethyl-5-methyl-2,5-hexanediol, 2,4-Dimethyl-2,4-pentandiol, 2,3-Dimethyl-2,3-butandiol, 1,4-Bis(2'-hydroxypropyl)benzol, und 1,3-Bis(2'-hydroxypropyl)benzol und
- δ-Hydroxybutyl-ε-hydroxy-capronsäureester, ω-Hydroxyhexyl-γ-hydroxy-buttersäureester, Adipinsäure-(β-hydroxyethyl)-ester oder Terephthalsäure-bis-(β-hydroxyethyl)-ester und
- Aliphatische Diamine, aromatische Diamine und alicyclische Diamine, insbesondere Methylenediamin, Ethylendiamin, 1,2- und 1,3-Diaminopropan, 1,4-Diaminobutan, Cadaverin (1,5-Diaminopentan), 1,6-Hexamethylendiamin, Isophorondiamin, Piperazin, 1,4-Cyclohexyldimethylamin, 4,4'-Diaminodicyclohexylmethan, Aminoethylethanolamin, 2,2,4-Trimethylhexamethylendiamin, 2,4,4-Trimethylhexamethylendiamin, Octamethylendiamin, m- or p-Phenylendiamin, 1,3- oder 1,4-Xylylendiamin, hydriertes Xylylendiamin, Bis(4-aminocyclohexyl)methan, 4,4'-Methylen-bis-(ortho-chloroanilin), Di-(methylthio)-toluoldiamin, Diethyltoluoldiamin, N,N'-Dibutylamindiphenylmethan, Bis-(4-amino-3-methylcyclohexyl)methan, Isomerengemische von 2,2,4- und 2,4,4-Trimethyl-hexamethylendiamin, 2-Methylpentamethylendiamin, Diethylentriamin, und 4,4- Diaminodicyclohexylmethan sowie
- Ethanolamin, Hydrazinethanol, 2-[(2-Aminoethyl)amino]ethanol.

Schließlich soll erwähnt sein, dass die Polyol-Komponente und/oder Polyamin-Komponente Doppelbindungen enthalten können, welche z.B. aus langkettigen, aliphatischen Carbonsäuren oder Fettalkoholen resultieren können. Eine Funktionalisierung mit olefinischen Doppelbindungen ist z. B. auch durch den Einbau vinylischer und/oder allylischer Gruppen möglich, welche ggf. alkyl-, aryl- und /oder aralkyl-substituiert sind, sowie ungesättigten Säuren wie Maleinsäureanhydrid, Acrylsäure oder Methacrylsäure sowie deren jeweiligen Estern stammen.

Bevorzugt im Sinne der Erfindung ist es, dass es sich bei der Polyol-Komponente und/oder Polyamin-Komponente um Polypropylendiol, Polypropylentriol, Polypropylenpolyol, Polyethylendiol, Polyethylentriol, Polyethylenpolyol, Polypropylendiamin, Polypropylentriamin, Polypropylenpolyamin, Poly-THF-diamin, Polybutadiendiol, Polyesterdiol, Polyestertriol, Polyesterpolyol, Polyesteretherdiol, Polyesterethertriol, Polyesteretherpolyol, besonders bevorzugt Polypropylendiol, Polypropylentriol, Poly-THF-diol, Polyhexandiolcarbamatdiol, Polycaprolactamdiol und Polycaprolactamtriol handelt. Weiterhin kann es sich auch um Mischungen der genannten Verbindungen handeln.

In einer besonders bevorzugten Ausführungsform enthalten die Polyurethane oder Polyharnstoffe Polyole mit einem Molekulargewicht zwischen 1000 und 10000, insbesondere 2000 bis 6000 und besonders bevorzugt 3000 bis 5000 g/mol. Bei diesen Polyolen handelt es sich besonders bevorzugt um Poly-THF-diol, Polypropylenglycol sowie statistische Copolymere und/oder Blockcopolymere des Ethylenoxids und Propylenoxids. Insbesondere kann es sich um Polyetherpolyole handeln, welche in einer bevorzugten Ausführungsform durch DMC Katalyse und in einer besonders bevorzugt Ausführungsform durch KOH-Katalyse hergestellt wurden. In einer bevorzugten Ausführungsform werden als Kettenverlängerer Diole mit einem Molekulargewicht von 60 bis 500, insbesondere 60 bis 180 eingesetzt, wobei die Dioligomere von Glycolen besonders bevorzugt sind. Hinsichtlich der erfindungsgemäßen Eigenschaftenen der Kleb- und Dichtstoffe ist es weiterhin besonders vorteilhaft, wenn die Polyurethane oder Polyharnstoffe 2,4- und/oder 2,6-Toluylendiisocyanat (TDI) und/oder 4,4'-, 2,4'- und/oder 2,2'-Diphenylmethandiisocyanat (MDI) und oder 1-Isocyanato-3,3,5-trimethyl-5-isocyanatomethylcyclohexan (IPDI) enthalten, insbesondere Isomerengemische des TDI, wobei ein 2,4-Isomerenanteil von über 40% besonders bevorzugt ist. Die Kombination der in diesem Absatz genannten speziellen Polyole und Isocyanate liefert erfindungsgemäße Kleb- oder Dichtstoffe mit besonders niedriger Glasübergangstemperatur und einer geringen Neigung zur Randzonenverschmutzung, ohne die weiteren anwendungstechnischen Eigenschaften negativ zu beeinflussen.

Die Polyurethane oder Polyharnstoffe der vorliegenden Erfindung können auch Vernetzer-Komponenten, Kettenstopper-Komponenten und weitere reaktive Komponenten enthalten. Einige Vernetzer wurden bereits unter den Kettenverlängerern mit mindestens drei gegenüber NCO reaktiven Wasserstoffen aufgeführt. Insbesondere kann es sich um Glycerin, Tetra(2-hydroxypropyl)ethylenediamine, Pentaerythritol, Trimethylolpropen, Sorbitol, Sucrose, Triethanolamin und Polymere mit mindestens drei reaktiven Wasserstoffen handeln (z.B. Polyetheramine mit mindestens drei Amingruppen, polymere Triole usw.). Als Kettenstopper kommen insbesondere Verbindungen mit reaktiven Wasserstoffen in Frage, wie Monoole, Monoamine, Monothiole und Monocarbonsäuren. In einer speziellen Ausführungsform werden Monoole eingesetzt, wobei C₁- bis C₁₂-Alkohole (insbesondere Methanol bis Dodecylalkohol), höhere Alkohole, Polymere wie etwa Polyether und Polyester mit einer OH-Gruppe und Struktureinheiten wie Glycerin oder Saccharose, in denen alle bis auf eine OH- Gruppe umgesetzt wurden, wobei bei der Umsetzung keine weiteren reaktiven Wasserstoffe eingeführt wurden.

In einer besonders UV beständigen Variante werden als Polyolkomponente bevorzugt Polyester mit mindestens zwei OH-Gruppen, Polycarbonate mit mindestens zwei OH-Gruppen, Polycarbonatester mit mindestens zwei OH-Gruppen, PolyTHF, Polypropylenglykol, statistische Copolymere und/oder Blockcopolymere des Ethylenoxids und Propylenoxids eingesetzt.

Kleb- und Dichtstoffe enthaltende Polyurethane können weiterhin stabilisierende Additive, z.B. zum Schutz vor UV-Strahlung, Oxidation enthalten, insbesondere werden Additive vom Hals-Typ verwendet. Beispielhaft sei das 4-Amino-2,2,6,6-tetramethylpiperidin genannt.

Für die Polyurethane und Polyharnstoffe können als latente Härter Oxazolidine, insbesondere Oxazolidine aus Diethanolamin und Isobutylaldehyd oder Pivalaldehyd und/ oder Aldemine aus Isophorondiamin, z.B. Incozol HP und Adolester basierende aliphatische Di- oder Trialdemine und Imine z.B. Vestamin A139, niedermolekularen aliphatischen Diaminen z.B. Hexandiamin und/oder Polyetherpolyamine wie z.B. Jeffamine^{®} und Isobutyraldehyd oder Pivalaldehyd und/oder ein Polyamin wie z.B. Hexamethylendiamin oder ein Jeffamin^{®} blockiert mit einem Hydroxypivalaldehydester eingesetzt werden.

In einer bevorzugten Ausführungsform enthält der erfindungsgemäße Kleb- oder Dichtstoff Polyurethane oder Polyharnstoffe, welche freie Isocyanat-Gruppen aufweisen. Insbesondere handelt es sich hierbei um isocyanat-terminierte Prepolymere. Die Isocyanat-Gruppen können mit Wasser reagieren (einschließlich Feuchtigkeit aus der Atmosphäre), wobei Amin-Gruppen gebildet werden, welche mit den Isocyanat-Gruppen der anderen Polyurethan- oder Polyharnstoff-Moleküle reagieren und hierbei Harnstoff-Verknüpfungen ausbilden, wodurch der Kleb- oder Dichtstoff aushärtet.

In einer weiteren Ausführungsform werden Polyharnstoff- oder Polyurethan-Kleb- und Dichtstoffe als Zweikomponenten-System ausgeführt. Die erste Komponente kann ein Polyisocyanat und/oder NCO-Prepolymer und die zweite Komponente ein Polyol, Polyamin und/oder einen Kettenverlängerer enthalten. Nach dem Vermischen der beiden Komponenten reagieren diese beiden Bestandteile miteinander, wodurch der Kleb- oder Dichtstoff aushärtet.

In einer weiteren erfindungsgemäßen Ausführungsform werden Polyurethan-Prepolymere und Polyharnstoff-Prepolymere mit mindestens einer geeigneten funktionalisierten polymerisierbaren Verbindung enthaltend Doppelbindung umgesetzt, wie z.B. Hydroxyethylmethacrylat, Hydroxyethylacrylat, Hydroxypropylmethacrylat, Hydroxypropylacrylat, 4-Hydroxybutylvinylether und Isoprenol.

Die silylierten Polyurethane und silylierten Polyharnstoffe sind aus mindestens einer Polyol- bzw. Polyamin-Komponente, aus mindestens einer Polyisocyanat-Komponente und aus mindestens einer Silylierungsmittel-Komponente aufgebaut.

Als bevorzugte Polyol- bzw. Polyamin-Komponente, sowie Polyisocyanat-Komponente sind alle für die bereits beschriebene Herstellung der Polyurethane und Polyharnstoffe genannten Verbindungen geeignet. Bezüglich der enthaltenen Silylierungsmittel-Komponente eignen sich
1. primäre und/oder sekundäre Aminosilane; α oder γ Stellung
   z. B.

   H₂N-CH₂-Si(OR²)₃

   H₂N-(CH₂)₃-Si(OR²)₃

   R'NH-(CH₂)₃-Si(OR²)₃

   R'NH-CH₂-CHMe-CH₂-Si(OR²)₃

   wobei OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso-Butyl, sec.-Butyl und/oder OR² eine Phenoxygruppe, eine Naphthyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C₁-C₂₀ Alkylgruppe z.B. Methyl, Ethyl, Propyl (n, iso), Butyl (n, iso, sec) oder Cyclohexyl oder Phenyl darstellt wobei R' eine lineare, verzweigte oder zyklische C₁-C₂₀ Alkylgruppe z.B. Methyl, Ethyl, Propyl (n, iso), Butyl (n, iso, sec) oder Cyclohexyl oder Phenyl darstellt,
1. Isocyanatosilane; α oder γ Stellung
2. Produkte erhalten durch Michael Addition primärer Aminosilane in α- und γ- Stellung und Ringschluss zum Hydantoin, z.B. US 5364955.

Bezüglich der enthaltenen Silylierungsmittel-Komponente wird auf die Patentanmeldungen WO2006/088839 A2 und WO 2008/061651 A1 sowie die Patentschrift EP 1 685171 B1 Bezug genommen.

Die im silylierten Polyurethan enthaltenen Silylierungsmittel-Komponenten, welche im Sinne der vorliegenden Erfindung bevorzugt sind, sind insbesondere Silane der allgemeinen Formel:

Y-R¹-Si(Me)ₙ(OR²)₃₋ₙ

wobei Y repräsentiert wird durch -NCO, -NHR, -NH₂ oder -SH,
R repräsentiert wird durch eine Alkylgruppe oder Arylgruppe mit ein bis 20 Kohlenstoffatomen, z.B. Methyl-, Ethyl-, iso-Propyl-, n-Propyl, Butylgruppe (n-, iso-, sec-), Cyclohexyl, Phenyl und Naphthyl,
R¹ repräsentiert wird durch eine divalente Kohlenwasserstoffeinheit mit ein bis 10 Kohlenstoffatomen, z.B. Ethylen, Methylethylen,
Me repräsentiert wird durch Methyl,
OR² unabhängig voneinander repräsentiert wird durch eine Alkoxygruppe, wobei R² eine Alkylgruppe mit ein bis 5 Kohlenstoffatomen darstellt, z.B. Methyl, Ethyl, iso-Propyl, n-Propyl, n-Butyl, iso.Butyl, sec.-Butyl und/oder OR² eine Phenoxygruppe, eine Naphtyloxygruppe, eine Phenoxygruppe, welche an der ortho-, metha- und/oder para-Position substituiert ist, mit einer C₁-C₂₀ Alkyl-, Alkylaryl-, Alkoxy-, Phenyl-, substituierten Phenyl-, Thioalkyl-, Nitro-, Halogen-, Nitril-, Carboxyalkyl-, Carboxyamid-, -NH₂ und/oder NHR-Gruppe, worin R eine lineare, verzweigte oder zyklische C₁-C₂₀ Alkylgruppe, z.B. Methyl, Ethyl, Propyl (n-, iso.), Butyl (n-, iso-, sec.-) oder Phenyl darstellt und
n repräsentiert wird durch 0, 1, 2 oder 3.

Als Silylierungsmittel-Komponente können aber auch Mischungen aus mindestens zwei der genannten Verbindungen im Polymer vorhanden sein.

In einer bevorzugten Ausführungsform sind als Silylierungsmittel-Komponente insbesondere Aminogruppen oder Isocyanatgruppen enthaltende Alkoxysilane von Interesse. Als Aminogruppen enthaltende Alkoxysilane sind insbesondere Verbindungen geeignet, welche ausgewählt sind aus der Gruppe 3-Aminopropyl-trimethoxysilan, 3-Aminopropyl-triethoxysilan, 3-Aminopropyl-methyldimethoxysilan, 3-Aminopropyl-methyldiethoxysilan, 3-Amino-2-methylpropyl-trimethoxysilan, 4-Aminobutyl-trimethoxysilan, 4-Aminobutyl-methyldimethoxysilan, 4-Amino-3-methylbutyl-trimethoxysilan, 4-Amino-3,3-dimethylbutyl-trimethoxysilan, 4- Amino-3,3-dimethylbutyl-dimethoxymethylsilan, Aminomethyl-trimethoxysilan, Aminomethyl-dimethoxymethylsilan, Aminomethylmethoxydimethylsilan, Aminomethyl-triethoxysilan, Aminomethyl-diethoxymethylsilan, Aminomethyl-ethoxydimethylsilan, N-Methyl-3-aminopropyl-trimethoxysilan, N-Methyl-3-aminopropyl-dimethoxymethylsilan, N-Ethyl-3-aminopropyl-trimethoxysilan, N-Ethyl-3-aminopropyl-dimethoxymethylsilan, N-Butyl-3-aminopropyl-trimethoxysilan, N-Butyl-3-aminopropyl-dimethoxymethylsilan, N-Cyclohexyl-3-aminopropyl-trimethoxysilan, N-Cyclohexylaminomethyltriethoxysilan, Cyclohexylaminomethyltrimethoxysilan, N- Phenyl-3-aminopropyl-trimethoxysilan, N-Methyl-3-amino-2-methylpropyl-tri- methoxysilan, N-Methyl-3-amino-2-methylpropyl-di-methoxymethylsilan, N-Ethyl-3-amino-2-methylpropyl-trimethoxysilan, N-Ethyl-3-amino-2-methylpropyl-dimethoxymethylsilan, N-Ethyl-3-aminopropyl-dimethoxy-methylsilan, N-Ethyl-3-aminopropyl-trimethoxysilan, N-Phenyl-4-aminobutyl-trimethoxysilan, N- Phenyl-aminomethyl-dimethoxymethylsilan, N-Phenyl-aminomethyl-trimethoxysilan, N-Cyclohexyl-aminomethyl-di-methoxymethylsilan, N-Cyclohexyl-aminomethyl-tri-methoxysilan, N-Methyl-aminomethyl-dimethoxymethylsilan, N-Methyl-aminomethyl-trimethoxysilan, N-Ethyl-aminomethyl-dimethoxy-methylsilan, N-Ethyl-aminomethyl-trimethoxysilan, N-Propyl-aminomethyl-dimethoxy-methylsilan, N-Propyl-aminomethyl-trimethoxysilan, N-Butyl-aminomethyl-dimethoxy-methylsilan, N-Butyl-aminomethyl-trimethoxysilan, N-(2-Aminoethyl)-3-amino-propyl-trimethoxysilan, N-(2-Aminoethyl)-3-amino-propyl-methyldimethoxysilan, 3-[2-(2-Aminoethylamino)-ethylamino]-propyl-trimethoxysilan, Bis(trimethoxysilylpropyl)amin, Bis-(dimethoxy(methyl)silylpropyl)amin, Bis(trimethoxysilylmethyl)amin, Bis(dimethoxy(methyl)silylmethyl)amin, 3-Ureidopropyltrimethoxysilan, N-Methyl[3-(Trimethoxysilyl)-propyl]carbamate, N-Trimethoxysilylmethyl-O-methylcarbamat, N-Dimethoxy(methyl)silylmethyl-carbamat sowie deren Analoga mit Ethoxy- oder Isopropoxygruppen oder n-Propoxygruppen oder n-Butoxygruppen oder iso Butoxygruppen oder sec.-Butoxygruppen anstelle der Methoxygruppen am Silicium.

Als Isocyanatgruppen enthaltende Alkoxysilane sind insbesondere Verbindungen geeignet, welche ausgewählt sind aus der Gruppe bestehend aus Isocyanatopropyltriethoxysilan, Isocyanatopropyltrimethoxysilan, Isocyanatopropylmethyldiethoxysilan, Isocyanatopropylmethyldimethoxysilan, Isocyanatomethyltrimethoxysilan, Isocyanatomethyltriethoxysilan, Isocyanatomethylmethyldiethoxysilan, Isocyanatomethylmethyldimethoxysilan, Isocyanatomethyldimethylmethoxysilan oder Isocyanatomethyldimethylethoxysilan, sowie deren Analoga mit Isopropoxy- oder n-Propoxygruppen.

Bezüglich der gemäß vorliegender Erfindung bevorzugt zu verwendenden silylierten Polyurethane und deren Herstellung wird weiterhin auf die Patentanmeldungen US 3,632,557, US 5,364,955, WO 01/16201, EP 931800, EP 1093482 B1, US 2004 260037, US 2007167598, US 2005119421, US 4857623, EP 1245601, WO 2004/ 060953, DE 2307794 Bezug genommen.

Unter den erfindungsgemäß einsetzbaren Acrylaten sind Verbindungen zu verstehen, welche mindestens ein Monomer aus der Reihe der Acrylsäureester und Methacrylsäureester enthalten, wobei bevorzugt mindestens 70 Gew.-% des Polymers aus mindestens einer Verbindung der Reihe der Acrylsäureester, Methacrylsäureester und Styrole besteht.

Bei den Monomeren der Acrylat-Komponente handelt es sich bevorzugt um mindestens eine Verbindung aus der Reihe Ethyldiglycolacrylat, 4-tert. Butylcyclohexylacrylat, Dihydrocyclopentadienylacrylat, Lauryl(meth)acrylat, Phenoxyethyl(meth)acrylat, Isobornyl(meth)acrylat, Dimethylaminoethyl(meth)acrylat, Cyanoacrylate, Citraconat, Itaconat und deren Derivate, (Meth)acrylsäure, Methyl(meth)acrylat, Ethyl(meth)acrylat, n-Propyl(meth)acrylat, Isopropyl(meth)acrylat, n-Butyl(meth)acrylat, Isobutyl(meth)-acrylat, tert-Butyl(meth)acrylat, n-Pentyl(meth)acrylat, n-Hexyl(meth)acrylat, Cyclohexyl(meth)acrylat, n-Heptyl(meth)acrylat, n-Octyl(meth)acrylat, 2-Propylheptyl(meth)-acrylat, 2-Ethylhexyl(meth)acrylat, Nonyl(meth)acrylat, Decyl(meth)acrylat, iso Decyl(meth)acrylat, Dodecyl(meth)acrylat, Phenyl(meth)acrylat, Toluyl(meth)acrylat, Benzyl(meth)acrylat, 2-Methoxyethyl(meth)acrylat, 3-Methoxybutyl(meth)acrylat, 2-Hydroxyethyl(meth)acrylat, 2-Hydroxypropyl(meth)acrylat, Stearyl(meth)acrylat, Glycidyl(meth)acrylat, 2-Aminoethyl(meth)acrylate, γ-(Methacryloyloxypropyl)trimethoxysilan, Ethyleneoxid Addukte von (Meth)acrylsäure, Trifluoromethylmethyl(meth)acrylat, 2-Trifluoromethylethyl(meth)acrylat, 2-Perfluoroethylethyl(meth)acrylat, 2-Perfluoroethyl-2-perfluorobutylethyl(meth)acrylat, 2-Perfluoroethyl(meth)acrylat, Perfluoromethyl-(meth)acrylat, Diperfluoromethylmethyl(meth)acrylat, 2-Perfluoromethyl-2-perfluoroethylmethyl(meth)acrylat, 2-Perfluorohexylethyl(meth)acrylat, 2-Perfluorodecylethyl-(meth)acrylat und 2-Perfluorohexadecylethyl(meth)acrylat.

In einer besonderen Ausführungsform handelt es sich um zwei oder mehrere Monomere aus der Reihe n-Butyl(meth)acrylat, 2-Hydroxyethyl(meth)acrylat, Acrylsäure, Methacrylsäure und Methylmethacrylat.

In einer weiteren Ausführungsform werden Copolymere aus mindestens zwei aller vorgenannten Monomere eingesetzt, wobei das Verhältnis in der Form gewählt wird, dass die erhaltenen Copolymere die gewünschten anwendungstechnischen Eigenschaften für Kleb- und Dichtstoffe aufweisen. Dem Fachmann sind geeignete Copolymere mit den gewünschten anwendungstechnischen Eigenschaften bekannt. Insbesondere sind Copolymere aus n-Butylacrylat und Methylmethacrylat bevorzugt, welche in einem molaren Verhältnis eingesetzt werden in denen das erhaltene Copolymer eine Glasübergangstemperatur besitzt, welche zwischen denen der entsprechenden Homopolymere liegt. Insgesamt kann es sich bei den Acrylaten der vorliegenden Erfindung sowohl um Copolymer als auch um Homopolymere handeln.

Die Acrylsäure-Polymere können weiterhin auch andere ethylenisch ungesättigte Monomere enthalten, z.B. Isoprenol oder Hydroxybutylvinylether. Als Beispiele seien hier mono- und polyungesättigte Kohlenwasserstoffmonomere, Vinylester (bspw. Vinylester von C₁- bis C₆-gesättigten Monocarbonsäuren), Vinylether, monoethylenisch ungesättigte Mono- und Polycarbonsäuren und Alkylester dieser Mono- und Polycarbonsäuren (bspw. Acrylsäureester und Methacrylsäureester wie etwa C₁- bis C₁₂-Alkyl und insbesondere C₁- bis C₄-Alkylester), Aminomonomere und Nitrile, Vinyl- und Alkylvinylidene und Amide von ungesättigten Carbonsäuren genannt. Weiterhin kommen ungesättigte Kohlenwasserstoff-Monomere umfassend Styrol-Verbindungen (bspw. Styrol, carboxyliertes Styrol und alpha-Methylstyrol), Ethylen, Propylen, Butylen und konjugierte Diene (Butadien, Isopren und Copolymere von Butadien und Isopren) in Frage. Bezüglich der Vinyl- und Halogenvinylidenmonomere seien Vinylchlorid, Vinylidenchlorid, Vinylfluorid und Vinylidenfluorid genannt. Beispiele für die Vinylester umfassen aliphatische Vinylester, wie etwa Vinylformat, Vinylacetat, Vinylpropionat, Vinylbutyrat, Vinylisobutyrat, Vinylvaleriat, Vinylcaproat und Allylester der gesättigten Monocarbonsäuren wie Allylacetat, Allylpropionat und Allyllactat. Hinsichtlich der Vinylether seien Methylvinylether, Ethylvinylether und N-Butylvinylether genannt. Typische Vinylketone umfassen Methylvinylketone, Ethylvinylketone und Isobutylvinylketone. Beispiele für die Dialkylester der monoethylenisch ungesättigten Dicarbonsäuren sind Dimethylmaleat, Diethylmaleat, Dibutylmaleat, Dioctylmaleat, Diisooctylmaleat, Dinonylmaleat, Diisodecylmaleat, Ditridecylmaleat, Dimethylfumarat, Diethylfumarat, Dipropylfumarat, Dibutylfumarat, Dioctylfumarat, Diisooctylfumarat, Didecylfumarat, Dimethylitaconat, Diethylitaconat, Dibutylitaconat und Dioctylitaconat. Insbesondere handelt es sich bei den monoethylenisch ungesättigten Monocarbonsäuren um Acrylsäure, Methacrylsäure, Ethacrylsäure und Crotonsäure. Bei den monoethylenisch ungesättigten Dicarbonsäuren seien Maleinsäure, Fumarsäure, Itaconsäure und Citronensäure genannt. Als monoethylenisch ungesättigte Tricarbonsäuren können im Hinblick auf die vorliegende Erfindung bspw. Aconitsäure und deren halogensubstituierte Derivate eingesetzt werden. Des Weiteren können die Anhydride und Ester der vorgenannten Säuren (bspw. Maleinsäureanhydrid und Citronensäureanhydrid) eingesetzt werden. Beispiele für Nitrile von ethylenisch ungesättigten Mono-, Di- und Tricarbonsäuren umfassen Acrylonitril, α-Chloracrylonitril und Methacrylonitril. Bei den Amiden der Carbonsäuren kann es sich um Acrylamide, Methacrylamide und andere α-substituierte Acrylamide und N-substituierte Amide bspw. N-Methylolacrylamid, N-Methylolmethylacrylamid, alkylierte N-Methylolacrylamide und N-Methylolmethacrylamide (bspw. N-Methoxymethylacrylamid und N-Methoxymethylmethacrylamid) handeln. Als Aminomonomere können substituierte und unsubstituierte Aminoalkylacrylate, Hydrochloridsalze der Aminomonomere und Methacrylate wie etwa β-Aminoethylacrylat, β-Aminoethylmethacrylat, Dimethylaminomethylacrylat, β-Methylaminoethylacrylat und Dimethylaminomethylmethacrylat eingesetzt werden. Im Rahmen der vorliegenden Erfindung seien hinsichtlich der kationischen Monomere α- und β-ethylenisch ungesättigte Verbindungen genannt, welche sich zur Polymerisation eignen und primäre, sekundäre oder tertiäre Aminogruppen enthalten, bspw. Dimethylaminoethylmethacrylat, Dimethylaminoneopentylacrylat, Dimethylaminopropylmethacrylat und tert.-Butylaminoethylmethacrylat oder organische und anorganische Salze dieser Verbindungen und/oder Alkylammonium-Verbindungen wie etwa Trimethylammoniumethylmethacrylatchlorid, Diallyldimethylammoniumchlorid, β-Acetamidodiethylaminoethylacrylatchlorid und Methaacrylamidopropyltrimethylammoniumchlorid. Diese kationischen Monomere können alleine oder in Kombination mit den vorgenannten weiteren Monomeren eingesetzt werden. Als Beispiele für hydroxy-haltige Monomere seien noch die β-Hydroxyethl(meth)acrylate, β-Hydroxypropyl(meth)acrylate, γ-Hydroxypropyl(meth)acrylate und genannt.

Die erfindungsgemäß einsetzbaren silyl-terminierten Acrylate sind aus mindestens einer Acrylat-Komponente und mindestens einer Silyl-Komponente aufgebaut. Die silyl-terminierten Acrylate können beispielsweise aus der Umsetzung von alkenyl-terminierten Acrylaten durch Hydrosilylierung erhalten werden, wobei die alkenyl-terminierten Acrylate über Atom Transfer Radical Polymerization (ATRP) hergestellt werden können oder aus der Umsetzung von alkenyl-terminierten Acrylaten mit einem Silylgruppen enthaltenden Monomer, wobei die alkenyl-terminierten Acrylate über Atom Transfer Radical Polymerization (ATRP) hergestellt werden können.

Als Monomere für den Aufbau der Acrylat-Komponente sind alle für die bereits beschriebene Herstellung der Polyacrylate genannten Verbindungen geeignet.

Wird die Silyl-Komponente durch Hydrosilylierung an die Acrylat-Komponente gebunden, so eignen sich als Silyl-Komponente insbesondere Trimethylchlorsilan, Dimethyldichlorsilan, Methyltrichlorsilan, Hexamethyldisilazan, Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)methylsilan und Bis(cyclohexylketoxymat)methylsilan. Hierbei sind insbesondere die Halosilane und Alkoxylsilane bevorzugt.

Wird die Silyl-Komponente durch ein Silylgruppen enthaltendes Monomer an die Acrylat-Komponente gebunden, so eignen sich als Silyl-Komponente insbesondere 3-(Meth)acryloxypropyltrimethoxysilan, 3-(Meth)acryloxypropylmethyldimethoxysilan, 3-(Meth)acryloxypropyltriethoxysilan, 3-(Meth)acryloxypropylmethyldiethoxysilan, (Meth)acryloxymethyltrimethoxysilan, (Meth)acryloxymethyl-methyldimethoxysilan, (Meth)acryloxymethyltriethoxysilan, (Meth)acryloxymethyl-methyldiethoxysilan.

Die erfindungsgemäßen silyl-terminierten Acrylate besitzen ein gewichtsmittleres Molekulargewicht zwischen 500 und 200000 g/mol, besonders bevorzugt zwischen 5000 und 100000 g/mol.

Bezüglich der gemäß vorliegender Erfindung bevorzugt zu verwendenden silyl-terminierten Acrylate wird auf die Patentanmeldungen EP 1498433 und auf Chem. Rev. (2001), 101, 2921-2990 Atom Transfer Radical Polymerization, Krzysztof Matyjaszewski and Jianhui Xia und auf Progress in Polymer Science 32, (2007), 93-146 Controlled/living radical polymerization: Features, developments, and perspectives, Wade A. Braunecker, Krzysztof Matyjaszewski, Elsevier Bezug genommen.

Unter den erfindungsgemäß verwendbaren Polysulfiden sind organische Polymere zu verstehen, welche Sulfid-Brücken im Polymer aufweisen. Bspw. kann es sich hierbei um ein Produkt der Reaktion eines organischen Dihalogenids mit Natriumdisulfid handeln. Als Beispiele für die organischen Dihalogenide seien aliphatische Dihalogenide (bspw. bis-Chlorethylformal) und Vinylhalogenide genannt. So führt bspw. die Reaktion von bis-Chlorethylformal mit einer Natriumdisulfit-Lösung zu einem Polymer der folgenden Struktur:

-[CH₂CH₂OCH₂OCH₂CH₂Sₓ]ₙ-

worin "n" die Anzahl der Monomere in dem Polymer und "x" die Anzahl der aufeinander folgenden Sulfid-Brücken in dem Monomer darstellt (x kann in den Monomeren des gleichen Moleküls variieren). Derartige hochmolekulare Polymere können dann zu kürzerkettigen Polymeren mit terminalen Thiolgruppen umgesetzt werden (bspw. durch reduktive Umsetzung mit NaSH und Na₂SO₂ und nachfolgendes Ansäuern). Auf diese Weise erhält man flüssige überbrückte Polysulfide mit terminalen Thiol-Endgruppen, welche in speziellen Ausführungsformen ein Molekulargewicht im Bereich von 1000 bis 8000 aufweisen. Die flüssigen Polymere können anschließend zu elastomeren Feststoffen gehärtet werden, bspw. durch die Oxidation der Thiol-Endgruppen zu Disulfit-Brücken unter Verwendung eines Oxidationsreagenzes wie etwa Bleioxid, Mangandioxid, Parachinondioxim und Zinkperoxid. Im Rahmen der vorliegenden Erfindung umfassen die Polysulfid-Kleb- und -Dichtstoffe alle Polysulfid-Polymere, welche durch Härtung in einen Feststoff überführt werden können. In speziellen Ausführungsformen umfassen die Polysulfid-Kleb- und -Dichtstoffe 30 bis 90 Gew.-% mindestens eines flüssigen Polysulfid-Polymers, 2 bis 50 Gew.-% eines Füllstoffs, 2 bis 10 Gew.-% eines Cyclohexanpolycarbonsäurederivats, 1 bis 3 Gew.-% eines Wasserfängers und zwischen 6 und 15 Gew.-% weitere Inhaltsstoffe wie etwa Adhesionspromotoren, Lösungsmittel und Härter. Ein Beispiel für die Herstellung von Polysulfid-Kleb- und - Dichtstoffen wird in der US 3,431,239 offenbart, wobei diese Methode durch Verweis in die vorliegende Anmeldung aufgenommen wird. Polysulfid-Kleb- und -Dichtstoffe können als ein- oder zweikomponentige Systeme eingesetzt werden.

Die bevorzugt erfindungsgemäß einsetzbaren silylierten Polysulfide sind aus mindestens einer Polysulfid-Komponente und mindestens einer Silylierungsmittel-Komponente aufgebaut und werden bevorzugt durch folgende vereinfachte Formel repräsentiert:

(CH₃)₃-Si-S-(C₂H₄OCH₂OC₂H₄Sₓ)ₙ-C₂H₄OCH₂OC₂H₄S-Si-(CH₃)₃

Diese bevorzugten silylierten Polysulfide werden nach folgendem Verfahren hergestellt:

(n+1) Cl-R-Cl + (n+1) Na₂Sₓ → HS-(R-Sₓ)ₙ-R-SH + (n+1) 2 NaCl

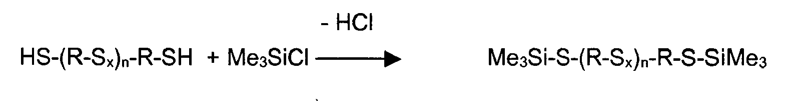

wobei R repräsentiert wird durch ein Alkylgruppe oder eine Ethergruppe.

Bezüglich der gemäß vorliegender Erfindung bevorzugt zu verwendenden silylierten Polysulfide wird auf die Veröffentlichungen "ALPIS Aliphatische Polysulfide", Hüthing u. Welpf Verlag, Basel, 1992, Heinz Lucke, ISBN 3-85739-1243 Bezug genommen.

Die erfindungsgemäß einsetzbaren silylierten Polyether sind aus mindestens einer Polyether-Komponente und mindestens einer Silylierungsmittel-Komponente aufgebaut. Seit einiger Zeit sind Baudichtstoffe auf dem Markt, welche sogenanntes MS-Polymer^{®} der Fa. Kaneka und/oder Excestar der Fa. Asahi Glass Chemical enthalten, wobei "MS" für "modified silicone" steht. Diese silyl-terminierten Polyether sind für die vorliegende Erfindung besonders geeignet. Es handelt sich dabei um Polymere, welche aus Polyetherketten mit Silanendgruppen bestehen, hergestellt durch die Hydrosilylierung von endständigen Doppelbindungen. Die Silanendgruppen bestehen aus einem an die Polyetherkette gebundenen Silizium, an welches zwei Alkoxygruppen und eine Alkylgruppe bzw. drei Alkoxgruppen gebunden sind. Durch die Reaktion mit Feuchtigkeit hydrolysieren die Alkoxygruppen zu Alkoholen, und die entstandenen Si-OH Gruppen kondensieren anschließend zu einem Si-O-Si Netzwerk.

Als Polyetherkomponente für die silyl-terminierten Polyether eignen sich unter anderem die unter Verwendung von Startermolekülen hergestellten Polyole aus Styroloxid, Propylenoxid, Butylenoxid, Tetrahydrofuran oder Epichlorhydrin. Insbesondere geeignet sind Polypropylenoxid, Polybutylenoxid, Polyethylenoxid und Tetrahydrofuran oder deren Mischungen. Hierbei sind insbesondere Molekulargewichte zwischen 500 und 100000 g/mol, besonders 3000 und 20000 g/mol bevorzugt.

Zur Einführung der Doppelbindungen wird der Polyether mit organischen Verbindungen enthaltend ein Halogenatom ausgewählt aus der Gruppe Chlor, Brom oder Jod sowie einer endständigen Doppelbindung umgesetzt. Insbesondere eignen sich hierfür Allylchloride, Allylbromide, Vinyl(chloromethyl)benzol, Allyl(chloromethyl)benzol, Allyl-(bromomethyl)benzol, Allyl(chloromethyl)ether, Allyl(chloromethoxy)benzol, Butenyl-(chloromethyl)ether, 1,6-Vinyl(chloromethoxy)benzol, wobei insbesondere Allylchlorid bevorzugt eingesetzt wird.

Die so erhaltenen Polyether mit endständigen Doppelbindungen werden durch Hydrosilylierung zu den silyl-terminierten Polyethern umgesetzt. Als Hydrosilylierungsmittel eignen sich hierbei insbesondere Trichlorsilan, Methyldichlorsilan, Dimethylchlorosilan, Phenyldichlorosilan sowie Trimethoxysilan, Triethoxysilan, Methyldiethoxysilan, Methyldimethoxysilan und Phenyldimethoxysilan sowie Methyldiacetoxysilan, Phenyldiacetoxysilan, Bis(dimethylketoxymat)methylsilan und Bis(cyclohexylketoxymat)methylsilan. Hierbei sind insbesondere die Halosilane und Alkoxylsilane bevorzugt.

Weiterhin wird auf die Patentanmeldungen US 3,971,751, EP 0319896, US 4618653, EP 0184829, EP 0265929, EP 1285946, EP 0918062, Adhesives and Sealants -Technology, Applications and Markets, David J. Drunn, ISBN 1-85957-365-7, Rapra Technology Limited, 2003 und Congress proceedings 27. April 2005 Stick 4th European Congress on Adhesive and Sealant Raw Materials, Innovative Raw Materials for Structural Adhesives, ISBN 3-87870-156-X, Vincentz Network, 2005 Bezug genommen.

Neben den Komponenten (A) und (B) kann die erfindungsgemäße Zusammensetzung zusätzliche weitere Komponenten enthalten. Dies können unter anderem die folgenden Hilfs- und Zusatzstoffe sein:
- Haftvermittler bspw. Epoxysilane, Anhydridosilane, Addukte von Silanen mit primären Aminosilanen, Ureidosilane, Aminosilane, Diaminosilane, sowie deren Analoga als Monomer oder Oligomer und Harnstoffsilane; z.B. Dynasylan AMEO, Dynasylan AMMO, Dynasylan DAMO-T, Dynasylan 1146, Dynasylan 1189, Silquest A-Link 15, Epoxidharze, Alkyltitanate, Titanchelate, aromatische Polyisocyanate, Phenolharze; die beispielsweise der allgemeinen Formel: 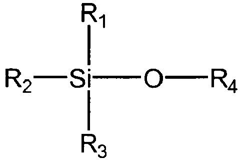 worin
   R₁, R₂ und R₃ unabhängig voneinander Halogen, Amin, Wasserstoff, Alkoxy-, Acyloxy-, Alkyl-, Aryl-, Aralkyloxy-, Alkylaryl-, Aralkylgruppen sowie
   Alkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie
   Arylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie
   Alkylarylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy- und Vinylgruppen sowie
   Aralkylgruppe mit olefinischen Gruppen, Halogeniden, Amino-, Carbonyl-, Epoxy- und Glycidoxy-, Ester-, Hydroxyimino-, Mercapto- und Sulfido-, Isocyanato-, Anhydrido-, Acryloxy-, Metharyloxy-, und Vinylgruppen, und
   R₄ Alkyl und Aryl entsprechen.
- Wasserfänger z. B. Vinyltriethoxysilan, Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsieb;
- Katalysatoren bspw. Metallkatalysatoren in Form von Organozinnverbindungen wie Dibutylzinndilaurat und Dibutylzinndiacetylacetonat, Bismut-organische Verbindungen oder Bismut-Komplexe; aminogruppenhaltige Verbindungen, bspw. 1,4-Diazabicyclo[2.2.2]-octan und 2,2'-Dimorpholinodiethylether, 1,8-Diazabicyclo[5.4.0]- undec-7-ene, 1,5-Diazabicyclo[4.3.0]non-5-ene, N,N'-Dimethylpiperazine sowie Aminosilane. Als Metallkatalysatoren kommen weiterhin Titan-, Zirkon-, Bismut-, Zink- und Lithiumkatalysatoren sowie Metallcarboxylate in Frage, wobei auch Kombinationen verschiedener Metallkatalysatoren eingesetzt werden können;
- Licht- und Alterungsschutzmittel, welche insbesondere als Stabilisatoren gegen Wärme, Licht und UV-Strahlung wirken, beispielsweise phenolische Antioxidanzien welche als Radikalfänger fungieren, wie 2,6-Di-tert-butyl-p-cresol, 2,6-Di-tert-butylphenol, 2,4-Dimethyl-6-tert-butylphenol, 2,2'-Methylene-bis(4-methyl-6-tert-butylphenol), 4,4'-Butyliden-bis(3-methyl-6-tert-butylphenol), 4,4'-Thio-bis(3-methyl-6-tert-butylphenol), 5-Tetrakis[methylene-3-(3,5-di-tert-butyl-4-hydroxyphenyl)-propionat]methane und 1,1,3-Tris(2-methyl-4-hydroxy-5-tert-butylphenyl)butane und Antioxidanzien auf Basis von Aminen (beispielsweise Phenyl-β-naphthylamin, α-Naphthylamin, N,N'-Di-sec-butyl-p-phenylendiamin, Phenothiazin und N,N'-Diphenyl-p-phenylendiamine)
- Flammschutzmittel, z.B. Al(OH)₃, Huntit, bromierte Alkyl- und Arylverbindungen, Magnesiumhydroxid, Ammoniumpolyphosphat;
- Biozide, wie bspw. Algizide, Fungizide oder das Pilzwachstum hemmende Substanzen, z.B. Ag, Ag⁺, CH₂O -abspaltende Verbindungen;
- Füllstoffe, z. B. gemahlene oder gefällte Calciumcarbonate, welche ggf. mit Fettsäuren bzw. Fettsäurengemischen beschichtet sind, z.B. Stearate, insbesondere feinteiliges beschichtetes Calciumcarbonat, Ruße, insbesondere industriell hergestellte Ruße, Kaoline, Aluminiumoxide, Kieselsäuren, insbesondere hochdisperse Kieselsäure aus Pyrolyseprozessen, PVC-Pulver oder Hohlkugeln. Bevorzugte Füllstoffe sind Ruß, Calciumcarbonate, wie bspw. gefällte oder natürliche Kreidetypen wie Omya 5 GU, Omyalite 95 T, Omyacarb 90 T, Omyacarb 2 T-AV^{®} der Fa. Omya, Ultra P-Flex^{®} der Fa. Specialty Minerals Inc, Socal^{®} U1S2, Socal^{®}312, Winnofil^{®} 312 der Fa. Solvay, Hakuenka^{®} der Fa. Shiraishi, hochdisperse Kieselsäuren aus Pyrolyseprozessen sowie Kombinationen aus diesen Füllstoffen. Ebenfalls geeignet sind Mineralien wie Kieselerde, Talk, Calciumsulfat (Gips) in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotid, die Gruppe der Soro-, Cyclo-, Ino-, Phyllo- und Hectosilicate, die Gruppe der schwerlöslichen Sulfate wie Gips, Anhydrit oder Schwerspat (BaSO₄) sowie Calciummineralien wie Calcit, pulverförmige Metalle (beispielsweise Aluminium, Zink oder Eisen) und Bariumsulfat;
- Rheologie-Modifizierer, wie Verdickungsmittel, z. B. Harnstoffverbindungen sowie Monoamine, z.B. n-Butylamin, Methoxybutylamin und Polyamidwachse, Bentonite, Silicone, Polysiloxane, hydriertes Rizinusöl, Metallseifen, wie Calciumstearat, Aluminumstearat, Bariumstearat, gefällte Kieselsäure, pyrogene Kieselsäure sowie Poly(oxy-1,2-ethandiyl)-α-hydro-Ω-hydroxy-polymer mit Oxy-1,2-ethandiyl-α-hydro-Ω-hydroxy-nonyl-phenoxyglycidylether Oligomeren und 5-Isocyanato-1-(isocyanatomethyl)-1,3,3-trimethylcyclohexan oder Hydroxyethylcellulose oder Polyacrylsäure-Polymere und Copolymere;
- Oberflächenaktive Substanzen wie bspw. Netzmittel, Verlaufsmittel, Entlüftungsmittel, Entschäumer und Dispergiermittel;
- Fasern, bspw. aus Kohlenstoff, Polyethylen oder Polypropylen, SiO₂, Cellulose;
- Pigmente, bspw. Titandioxid;
- Lösemittel wie etwa Wasser, Solvent Naphta, Methylester, aromatische Kohlenwasserstoffe wie Polyalkylbenzole, Toluol und Xylol, Lösungsmittel auf Basis von Estern wie Ethylacetat, Butylacetat, Allylacetat und Celluloseacetat und Lösungsmittel auf Basis von Ketonen wie Methylethylketon, Methylisobutylketon und Diisobutylketon sowie Aceton und Mischungen aus mindestens zwei der vorgenannten Lösungsmittel
sowie weitere in Kleb- und Dichtstoffen eingesetzte Substanzen.

Als weitere Komponenten können die erfindungsgemäßen Kleb- und Dichtstoff- weitere Weichmacher enthalten. Derartige Weichmacher werden bspw. in der WO 2008/ 027463 auf Seite 19, Zeile 5 bis Seite 20, Zeile 9 offenbart. Auf die WO 2008/027463 wird hiermit Bezug genommen und deren Inhalt wird hiermit in die Anmeldung aufgenommen.

Der erfindungsgemäße Kleb- oder Dichtstoff umfasst in einer Ausführungsform 10 bis 90 Gew.-% Komponente (A), 3 bis 60 Gew.-% Komponente (B), 0 bis 80 Gew.-% Füllstoffe und 0 bis 20 Gew.-% Rheologiemodifizierer. In einer bevorzugten Ausführungsform sind 1 bis 80 Gew.-% Füllstoffe, 0 bis 50 Gew.-% Wasser und/oder Lösemittel und 0,5 bis 20 Gew.-% Rheologiemodifizierer anwesend. Als besonders bevorzugt ist eine Menge von 25 bis 40 Gew.-% Komponente (A), 5 bis 40 Gew.-% Komponente (B), 30 bis 55 Gew.-% Füllstoffe, 0 bis 10 Gew.-% Wasser und 1 bis 10 Gew.-% Rheologiemodifizierer anzusehen.

Bevorzugt handelt es sich im Falle der Polyurethane, silylierten Polyurethane, silylierten Polyether und silylierten Polysulfide bei dem erfindungsgemäßen Kleb- und Dichtstoffen um Einkomponenten-Systeme. Es kann aber auch vorteilhaft sein, das erfindungsgemäße System als Zweikomponenten-Systeme auszuführen. Hierbei enthält die eine Komponente die Polymerkomponente (A), während die zweite Komponente beispielsweise einen Katalysator oder mikronisiertes Wasser als Booster enthält, der die Aushärtung des Systems beschleunigt. Es ist vorteilhaft, darauf zu achten, dass die eingesetzten Komponenten in einem Einkomponenten-System die Lagerstabilität der Zusammensetzung nicht beeinträchtigen, d. h. dass sie während der Lagerung die zur Vernetzung führende Reaktion der in der Zusammensetzung enthaltenen Silangruppen nicht in signifikantem Ausmaß auslösen. Insbesondere bedeutet dies, dass solche weiteren Komponenten bevorzugt kein oder höchstens Spuren von Wasser enthalten. Es kann daher sinnvoll sein, gewisse Komponenten vor dem Einmischen in diese Zusammensetzungen chemisch oder physikalisch zu trocknen. Ist dies nicht möglich oder nicht gewünscht, kann es in diesen Fällen vorteilhaft sein, den Kleb- oder Dichtstoff als Zweikomponenten-System auszuführen, wobei die Komponente oder die Komponenten, welche die Lagerstabilität nachteilig beeinflussen, getrennt von Komponente (A) in die zweite Komponente formuliert werden.

Die erfindungsgemäßen Zusammensetzungen enthaltend silylierte Polyurethane, silylierte Polyether und silylierte Polysulfide werden unter Ausschluss von Feuchtigkeit aufbewahrt, sie sind lagerstabil, d. h. sie können unter Ausschluss von Feuchtigkeit in einer geeigneten Verpackung oder Anordnung wie bspw. einem Fass, einem Beutel oder einer Kartusche über einen Zeitraum von mehreren Monaten bis zu einigen Jahren aufbewahrt werden, ohne dass sie sich in ihren Anwendungseigenschaften oder in ihren Eigenschaften nach der Aushärtung in einem für den Gebrauch relevanten Ausmaß verändern. Üblicherweise wird die Lagerstabilität über die Messung der Viskosität, der Auspressmenge oder der Auspresskraft ermittelt.

Die Silangruppen haben die Eigenschaft, bei Kontakt mit Feuchtigkeit zu hydrolysieren. Dabei bilden sich Organosilanole (siliciumorganische Verbindung enthaltend ein- oder mehrere Silanolgruppen, SiOH-Gruppen) und durch nachfolgende Kondensationsreaktionen Organosiloxane (siliciumorganische Verbindung enthaltend ein oder mehrere Siloxangruppen, Si-O-Si-Gruppen). Als Ergebnis dieser Reaktion, welche durch den Einsatz von Katalysatoren beschleunigt werden können, härtet die Zusammensetzung schließlich aus. Dieser Prozess wird auch als Vernetzung bezeichnet. Das für die Aushärtungsreaktion benötigte Wasser kann entweder aus der Luft stammen (Luftfeuchtigkeit) oder aber die Zusammensetzung kann mit einer Wasser enthaltenden Komponente in Kontakt gebracht werden, z. B. durch Bestreichen bspw. mit einem Abglättmittel oder durch Besprühen oder es kann der Zusammensetzung bei der Applikation eine Wasser enthaltende Komponente zugesetzt werden, z. B. in Form einer wasserhaltigen Paste, die bspw. über einen Statikmischer eingemischt wird.

Die Silangruppen enthaltenden Zusammensetzungen härten, bei Kontakt mit Feuchtigkeit aus. Die Aushärtung erfolgt je nach Temperatur, Art des Kontaktes, der Menge der Feuchtigkeit und der Anwesenheit allfälliger Katalysatoren unterschiedlich schnell. Bei der Aushärtung mittels Luftfeuchtigkeit wird zunächst eine Haut an der Oberfläche der Zusammensetzung gebildet. Die sog. Hautzeitbildung stellt demnach ein Maß für die Aushärtungsgeschwindigkeit dar. Typischerweise ist eine derartige Hautbildungszeit von bis zu 2 Stunden bei 23 °C und 50 %iger relativer Luftfeuchtigkeit erstrebenswert. Die Zusammensetzungen enthaltend silylierte Polyurethane, silylierte Polyether und silylierte Polysulfide verfügen im ausgehärteten Zustand über eine hohe mechanische Festigkeit bei einer hohen Dehnbarkeit sowie über gute Haftungseigenschaften. Dadurch eignen sie sich für eine Vielzahl von Anwendungen, insbesondere als elastischer Klebstoff, als elastischer Dichtstoff oder als elastische Beschichtung. Insbesondere eignen sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Ein weiterer Gegenstand der vorliegenden Erfindung ist die Verwendung des Kleb- oder Dichtstoffes als Ein- oder Zwei-Komponenten-System zur Herstellung von stoffschlüssigen Verbindungen zwischen Fügeteilen. Die erfindungsgemäße Zusammensetzung verfügt im ausgehärteten Zustand über eine hohe mechanische Festigkeit bei einer hohen Dehnbarkeit sowie über gute Haftungseigenschaften. Dadurch eignet sie sich für eine Vielzahl von Anwendungen, insbesondere als elastischer Klebstoff, als elastischer Dichtstoff oder als elastische Beschichtung. Insbesondere eignet sie sich für Anwendungen, welche eine schnelle Aushärtung erfordern und hohe Anforderungen an die Dehnbarkeit stellen bei gleichzeitig hohen Anforderungen an die Haftungseigenschaften und die Festigkeiten.

Geeignete Anwendungen sind bspw. die stoffschlüssigen Verbindungen zwischen Fügeteilen aus Beton, Mörtel, Glas, Metall, Keramik, Kunststoff und/oder Holz. In einer besonderen Ausführungsform handelt es sich bei den Fügeteilen zum einen um eine Oberfläche und zum anderen um einen Teppichbelag, einen PVC-Belag, ein Laminat, einen Gummibelag, einen Korkbelag, einen Linoleumbelag, einen Holzbelag, z.B. Parkett, Dielen, Schiffsboden oder Fliesen. Insbesondere kann die erfindungsgemäße Zusammensetzung für das Verfugen von Natursteinen verwendet werden. Weiterhin können die erfindungsgemäßen Kleb- und Dichtstoffe für die Fertigung oder Reparatur von industriellen Gütern oder Konsumgütern eingesetzt werden sowie für das Abdichten oder Verkleben von Bauteilen im Hoch- oder Tiefbau sowie insbesondere im Sanitärbereich. Im speziellen kann es sich bei den Fügeteilen um Teile im Auto-, Trailer-, LKW-, Wohnwagen-, Zug-, Flugzeug-, Schiff- und Gleisbau handeln.

Ein Klebstoff für elastische Verklebungen in diesem Bereich wird bevorzugt in Form einer Raupe in einer im Wesentlichen runden oder dreieckigen Querschnittsfläche aufgetragen. Elastische Verklebungen im Fahrzeugbau sind bspw. das Ankleben von Teilen wie Kunststoffabdeckungen, Zierleisten, Flansche, Stossstangen, Führerkabinen oder andere Anbauteile an die lackierte Karosserie eines Transportmittels oder das Einkleben von Scheiben in die Karosserie.

Ein bevorzugter Anwendungsbereich im Hoch- und Tiefbau sind Hochbaufugen, Bodenfugen, Fugen nach dem Wasserhaushaltsgesetz, Anschlussfugen, Dehnfugen oder Dichtfugen im Sanitärbereich. In einer bevorzugten Ausführungsform wird die beschriebene Zusammensetzung als elastischer Kleb- oder Dichtstoff eingesetzt. Als elastischer Klebstoff weist die Zusammensetzung typischerweise eine Bruchdehnung von mindestens 5 % und als elastischer Dichtstoff von mindestens 300 % bei Raumtemperatur auf.

Für eine Anwendung der Zusammensetzung als Dichtstoff für bspw. Fugen im Hoch- oder Tiefbau oder für eine Anwendung als Klebstoff für elastische Verklebungen bspw. im Fahrzeugbau weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Fügeteil aufgetragen. Geeignete Methoden zum Auftragen sind bspw. die Applikation aus handelsüblichen Kartuschen, Schlauchbeuteln oder in Kartuschen eingelegten Schlauchbeuteln, welche manuell oder mittels Druckluft betrieben werden oder aus einem Fass oder Hobbock mittels einer Förderpumpe oder einer Exzenterschneckenpumpe, ggf. mittels eines Applikationsroboters.

Die Fügeteile können bei Bedarf vor dem Applizieren des Kleb- oder Dichtstoffes vorbehandelt werden. Derartige Vorbehandlungen umfassen insbesondere physikalische und/oder chemische Reinigungsverfahren bspw. Schleifen, Sandstrahlen, Bürsten oder dgl. oder Behandeln mit Reinigern oder Lösemitteln oder das Aufbringen eines Haftvermittlers, einer Haftvermittlerlösung oder eines Primers.

Bei der Anwendung als Klebstoff wird die erfindungsgemäße Zusammensetzung entweder auf das eine oder das andere Fügeteil oder auf beide Fügeteile appliziert. Danach werden die zu klebenden Teile gefügt, worauf der Klebstoff aushärtet. Es ist jeweils darauf zu achten, dass das Fügen der Teile innerhalb der sog. Offenzeit erfolgt, um zu gewährleisten, dass die beiden Fügeteile verlässlich miteinander verklebt werden.

Ein weiterer Gegenstand der vorliegenden Erfindung ist ein Verfahren zur Herstellung eines Kleb- oder Dichtstoffes, wobei a) ein Teil der Komponente (A), vorzugsweise zwischen 10 und 50 Gew.-% der Komponente (A), und die gesamte Komponente (B) und optional weitere Komponenten, insbesondere aus der Reihe Füllstoff, Thixotropiermittel, Antioxidans und UV-Absorber, vorgelegt werden, b) optional mindestens eine Verbindung aus der Reihe Lösungsmittel und Haftvermittler und, c) der Rest der Komponente (A) und optional weitere Komponenten, insbesondere aus der Reihe Füllstoffe, Thixotropiermittel, Antioxidans, UV-Absorber, Lösungsmittel und Haftvermittler zugesetzt und gemischt werden.

Für das erfindungsgemäße Herstellverfahren ist es als bevorzugt anzusehen, dass die eingesetzten Komponenten während des gesamten Prozesses, miteinander gemischt bzw. in Bewegung gehalten werden. Alternativ können die eingesetzten Komponenten auch erst am Ende des Herstellverfahrens miteinander gemischt werden. Als Mischeinrichtungen eignen sich alle dem Fachmann hierfür bekannten Vorrichtungen, insbesondere kann es sich um einen statischen Mischer, Planetenmischer, horizontalen Turbulentmischer (Fa. Drais), Planetendissolver bzw. Dissolver (Fa. PC Laborsysteme), Intensivmischer und/oder Extruder handeln.

Das erfindungsgemäße Verfahren zur Herstellung des Kleb- oder Dichtstoffes kann diskontinuierlich bspw. in einem Planetenmischer durchgeführt werden. Es ist aber auch möglich, das Verfahren kontinuierlich zu betreiben, wobei sich hierfür insbesondere Extruder als geeignet erwiesen haben. Hierbei wird das Bindemittel in den Extruder gegeben und flüssige sowie feste Zuschlagsstoffe zudosiert.

Überraschend wurde gefunden, dass die erfindungsgemäßen Kleb- und Dichtstoffe, im Vergleich zum Stand der Technik, eine geringe Härte sowie einen niedrigeren Fließpunkt aufweisen. Weiterhin wurde eine erhöhte Dehnung der Kleb- und Dichtstoffe beobachtet. Durch die Bereitstellung der erfindungsgemäßen Kleb- und Dichtstoffe konnte somit die gestellt Aufgabe in vollem Umfang gelöst werden.

Die nachfolgenden Beispiele verdeutlichen die Vorteile der vorliegenden Erfindung.

### Herstellungsbeispiel 1:

### Herstellung eines C₁₀-Phthalsäureestergemisches

Ein Gemisch von Alkoholen mit 10 Kohlenstoffatomen (2,4 Mol; 1,2-facher stöchiometrischer Überschuß), enthaltend 89,49 Gew.-% 2-Propylheptanol, 10,47 Gew.-% 2-Propyl-4-methylhexanol und 0,04 Gew.-% 2-Propyl-5-methylhexanol, wurde mit Phthalsäureanhydrid (1,0 Mol) in Gegenwart von Isopropylbutyltitanat (0,001 Mol) als Katalysator in einem Autoklaven unter N₂-Einperlung und Rühren bei einer Reaktionstemperatur von 230°C umgesetzt. Das gebildete Reaktionswasser wurde fortlaufend mit dem N₂-Strom aus dem Reaktionsgemisch entfernt. Die Reaktionszeit betrug 180 min. Anschließend wurden überschüssige Alkohole bei einem Druck von 50 mbar abdestilliert. Das Roh-C₁₀-Phthalsäureestergemisch wurde mit 0,5 %iger Natronlauge unter Rühren bei 80°C neutralisiert. Es bildete sich ein Zwei-Phasen-Gemisch mit einer oberen organischen Phase und einer unteren wässrigen Phase (Ablauge mit hydrolysiertem Katalysator). Die wässrige Phase wurde abgetrennt und die organische Phase zweimal mit H₂O nachgewaschen. Zur weiteren Reinigung wurde das neutralisierte und gewaschene C₁₀-Phthalsäureestergemisch mit Wasserdampf bei 180°C und 50 mbar Druck ausgedämpft. Das so gereinigte C₁₀-Phthalsäureestergemisch wurde dann bei 150°C/50 mbar mittels Durchleiten eines N₂-Stroms getrocknet, anschließend mit Aktivkohle verrührt und über eine Nutsche mit Filterhilfsmittel Supra-Theorit bei einer Temperatur von 80°C unter Anwendung verminderten Drucks abfiltriert. Das so erhaltene erfindungsgemäße C₁₀-Phthalsäureestergemisch besitzt eine Dichte bei 20°C (DIN 51757 bzw. ASTM D-4052) von 0,96 g/cm3 und eine dynamische Viskosität bei 20°C (DIN 51562 bzw. ASTM D445) von 120 mPa*s.

### Anwendungsbeispiel 1

1/3 des Bindemittels Desmoseal M 280, der jeweilige Weichmacher, Omyacarb 5 GU, und 2/3 des Zusatzmittels Ti wurden vorgelegt und bei einer Temperatur von 60°C im Vakuum miteinander vermischt. Im Anschluss wurden 2/3 Desmoseal M 280 und Aerosil R 202 zugegeben. Im letzten Schritt wurden Dynasylan GLYMO, 1/3 Zusatzmittel Ti und Lupranat N 106 DMDEE zugefügt und gemischt. Der Dichtstoff wurde in Aluminium- oder Kunststoffkartuschen abgefüllt. Die jeweiligen Formulierungen sind in der Tabelle 1 wiedergegeben, wobei sich die Zahlenangaben in den Spalten zwei bis fünf auf Gewichtsteile beziehen.

**Tabelle 1**

| | Palatinol 10-P | Eastman 168 | Mesamoll | Jayflex DI DP | Gew.-% |
|---|---|---|---|---|---|
| Weichmacher | 160,00 | 160,00 | 160,00 | 160,00 | 20,00 |
| Desmoseal M 280 | 240,00 | 240,00 | 240,00 | 240,00 | 30,00 |
| Omyacarb 5 GU | 337,60 | 337,60 | 337,60 | 337,60 | 42,20 |
| Aerosil R 202 | 48,00 | 48,00 | 48,00 | 48,00 | 6,00 |
| Dynasylan GLYMO | 8,00 | 8,00 | 8,00 | 8,00 | 1,00 |
| Zusatzmittel Ti | 6,00 | 6,00 | 6,00 | 6,00 | 0,75 |
| Lupranat N 106 DMDEE | 0,40 | 0,40 | 0,40 | 0,40 | 0,05 |
| | | | | | |
| Gesamt | 800,00 | 800,00 | 800,00 | 800,00 | 100,00 |

| | | | | | |
|---|---|---|---|---|---|
| Legende: Desmoseal M 280: Polyurethan Bindemittel der Fa. Bayer MaterialScience AG Jayflex DIDP: Diisodecylphthalat der Exxon Mobil Corporation Palatinol 10-P: Di-2-propylheptylphthalat der BASF SE Mesamoll: Alkansulfonsäurephenylester der Lanxess Deutschland GmbH Eastman 168: Bis(2-ethylhexyl)terephthalat der Eastman Chemical Company Omyacarb 5 GU: gemahlene Kreide der Omya Inc. Zusatzmittel Ti: Toluolsulfonylisocyanat der OMG Borchers GmbH Aerosil R 202: pyrogene Kieselsäure der Evonik Degussa GmbH Dynasylan GLYMO: 3-Glycidyloxypropyltrimethoxysilan der Evonik Degussa GmbH Lupranat N 106 DMDEE: 2,2'-Dimorpholinyldiethylether der BASF SE | | | | | |

Die Ergebnisse sind in der Tabelle 2 wiedergegeben.

**Tabelle 2**

| | Palatinol 10-P | Eastman 168 | Mesamoll | Jayflex DIDP |
|---|---|---|---|---|
| Dehnung % nach 7 Tagen Lagerung bei 20°C (DIN 53504) | 298 | 245 | 238 | 275 |
| Shore A Härte (DIN 53505) | 35 | 46 | 40 | 40 |
| Fließpunkt Pa | 7496 | 9177 | 11390 | 9900 |

Wie den Beispielen zu entnehmen ist, kann durch die Zugabe von Palatinol 10 P die Dehnung gegenüber der Verwendung von herkömmlichen Phthalaten im Kleb- und Dichtstoff erhöht werden. Gleichzeitig wird die Härte reduziert und die Verarbeitungseigenschaften in Form eines niedrigen Fließpunktes verbessert.

### Anwendungsbeispiel 2

Das Bindemittel Acronal S 410 wurde auf einen pH Wert von 8 eingestellt. Danach wurden der Pigmentverteiler N L vorgelegt, Lutensol AO 89 zugegeben und miteinander vermischt. Im Anschluss wurden der jeweilige Weichmacher, Kronos 2056 und Omyacarb 5 GU zugefügt und gemischt. Der Dichtstoff wurde in Aluminium- oder Kunststoffkartuschen abgefüllt. Die jeweiligen Formulierungen sind in der Tabelle 3 wiedergegeben.

**Tabelle 3**

| | Palatinol 10-P | Eastman 168 | Mesamoll | Jayflex DIDP | Gew.-% |
|---|---|---|---|---|---|
| Acronal S 410 pH 8 | 256,00 | 256,00 | 256,00 | 256,00 | 32,00 |
| Pigmentverteiler NL | 4,80 | 4,80 | 4,80 | 4,80 | 0,60 |
| Lutensol AO 89 | 2,40 | 2,40 | 2,40 | 2,40 | 0,30 |
| Weichmacher | 80,00 | 80,00 | 80,00 | 80,00 | 10,00 |
| Kronos 2056 | 12,00 | 12,00 | 12,00 | 12,00 | 1,50 |
| Omyacarb 5 GU) | 444,80 | 444,80 | 444,80 | 444,80 | 55,60 |
| | | | | | |
| Gesamt | 800,00 | 800,00 | 800,00 | 800,00 | 100,00 |

| | | | | | |
|---|---|---|---|---|---|
| Die Zahlenangaben in den Spalten zwei bis fünf beziehen sich auf Gewichtsteile. Acronal S 410: Acrylat Dispersion der BASF SE Pigmentverteiler NL: Polyacrylsäure Natriumsalz in Wasser der BASF SE Lutensol AO 89: Fettalkoholethoxylat, in Wasser der BASF SE Jayflex DIDP: Diisodecylphthalat der ExxonMobil Corporation Eastman 168: Bis(2-ethylhexyl)terephthalat der Eastman Chemical Company Mesamoll: Alkansulfonsäurephenylester der Lanxess Deutschland GmbH Omyacarb 5 GU: gemahlene Kreide der Omya Inc. Kronos 2056: Titandioxid der KRONOS INTERNATIONAL, Inc. | | | | | |

Die Ergebnisse sind in der Tabelle 4 wiedergegeben.

**Tabelle 4**

| | Palatinol 10-P | Eastman 168 | Mesamoll | Jayflex DI DP |
|---|---|---|---|---|
| Dehnung % nach 7 Tagen Lagerung bei 20°C (DIN 53504) | 104,11 | 89,90 | 69,09 | 96,67 |
| Shore A Härte (DIN 53505) | 15 | 18 | 20 | 16 |
| Fließpunkt Pa | 6.969 | 8.752 | 7.295 | 8.094 |

Wie den Beispielen zu entnehmen ist, wird durch die Zugabe von Palatinol 10 P die Dehnung gegenüber der Verwendung von herkömmlichen Weichmachern im Kleb- und Dichtstoff erhöht. Gleichzeitig wird die Härte reduziert und die Verarbeitungseigenschaften in Form eines niedrigen Fließpunktes verbessert.

### Anwendungsbeispiel 3

### Allgemeine Herstellvorschrift

Weichmacher, Socal U1S2, Omyalite 90 T, Crayvallac SLX und Dynasylan VTMO wurden vorgelegt und bei einer Temperatur von 60°C im Vakuum 30 Minuten miteinander vermischt. Im Anschluss wurde das Polymer ST XP 75 zugegeben. Im letzten Schritt wurden Dynasylan AMMO und Metatin 740 zugefügt und gemischt. Der Dichtstoff wurde in Aluminium- oder Kunststoffkartuschen abgefüllt. Die jeweiligen Formulierungen sind in Tabelle 5 angegeben.

**Tabelle 5**

| | Palatinol 10-P | Eastman 168 | Mesamoll | Jayflex DIDP | Gew.-% |
|---|---|---|---|---|---|
| Weichmacher | 120,00 | 120,00 | 120,00 | 120,00 | 15,00 |
| Socal U1S2 | 385,60 | 385,60 | 385,60 | 385,60 | 48,20 |
| Polymer ST XP 75 | 240,00 | 240,00 | 240,00 | 240,00 | 30,00 |
| Crayvallec SLX | 8,00 | 8,00 | 8,00 | 8,00 | 1,00 |
| Omyalite 90 T | 32,00 | 32,00 | 32,00 | 32,00 | 4,00 |
| Dynasylan VTMO | 5,60 | 5,60 | 5,60 | 5,60 | 0,70 |
| Dynasylan AMMO | 8,00 | 8,00 | 8,00 | 8,00 | 1,00 |
| Metatin 740 | 0,80 | 0,80 | 0,80 | 0,80 | 0,10 |
| Gesamt | 800,00 | 800,00 | 800,00 | 800,00 | 100,00 |

| | | | | | |
|---|---|---|---|---|---|
| Die Zahlenangaben in den Spalten zwei bis fünf beziehen sich auf Gewichtsteile. Polymer ST XP 75: silanterminiertes Polyurethanbindemittel der Hanse Chemie AG Eastman 168: Bis(2-ethylhexyl)terephthalat der Fa. Eastman Chemical Company Omyalite 90 T: Hochreines oberflächenbehandeltes Calciumcarbonat der Omya Inc. Crayvallac SLX: mikronisiertes Amidwachs der Cray Valley Dynasylan VTMO: Vinyltrimethoxysilan der Evonik Degussa GmbH Dynasylan AMMO: 3-Aminopropyltrimethoxysilan der Evonik Degussa GmbH Metatin 740: Dibutylzinnketonat der Acima AG Socal U1S2: Fällungskreide ultrafein gecoatet der Solvay S.A. Jayflex DIDP: Diisodecylphthalat der Exxon Mobil Corporation Palatinol 10-P: Di-2-propylheptylphthalat der BASF SE Mesamoll: Alkansulfonsäurephenylester der Lanxess Deutschland GmbH | | | | | |

Die Ergebnisse sind in der Tabelle 6 wiedergegeben.

**Tabelle 6**

| | Palatinol 10-P | Eastman 168 | Mesamoll | Jayflex DIDP |
|---|---|---|---|---|
| Dehnung % nach 7 Tagen Lagerung bei 20°C (DIN 53504) | 618 | 482 | 537 | 524 |
| Shore A Härte (DIN 53505) | 40 | 44 | 43 | 44 |
| Fließpunkt Pa | 11.530 | 18.490 | 23.830 | 15.620 |

Wie den Beispielen zu entnehmen ist, wird durch die Zugabe von Palatinol 10 P die Dehnung gegenüber der Verwendung von herkömmlichen Weichmachern im Kleb- und Dichtstoff erhöht. Gleichzeitig wird die Härte reduziert und die Verarbeitungseigenschaften in Form eines niedrigen Fließpunktes verbessert.

### Bestimmung des Fließpunktes:

Für sämtliche Beispiele wurde der Fließpunkt mittels eines PHYSICA MCR 301 MODULAR COMPACT RHEOMETER (Hersteller: Anton Paar GmbH; Graz, AT) durchgeführt. Als Messsystem wurde ein Platte/Platte-System mit einem Durchmesser von 50 mm gewählt. Die Spaltbreite betrug 2 mm. Die Messung erfolgte bei 23°C unter folgenden Bestimmungen: Deformation 0,01-100%; Kreisfrequenz: 10 Hz. Es wurden bei der Messung Verlust- und Speichermodul aufgezeichnet und deren Schnittpunkt bestimmt. Der so erhaltene Wert wird als Fließpunkt ausgewiesen.

## Patentansprüche

1. Kleb- oder Dichtstoff enthaltend
(A) mindestens eine Verbindung ausgewählt aus der Gruppe der Polyurethane, Polyharnstoffe, Polyacrylate, wässrigen Polyacrylaten, Silikonen, Polysulfide, silylierten Polyurethane, silylierten Polyether, silylierten Polysulfide und silyl-terminierten Acrylate und
(B) mindestens einen Ester einer aliphatischen oder aromatischen Di- oder Tricarbonsäure mit einer C₁₀-Alkoholkomponente enthaltend 2-Propylheptanol oder ein C₁₀-Alkoholgemisch aus 2-Propylheptanol und mindestens einem der C₁₀-Alkohole 2-Propyl-4-methyl-hexanol, 2-Propyl-5-methyl-hexanol, 2-Isopropyl-heptanol, 2-Isopropyl-4-methyl-hexanol, 2-Isopropyl-5-methylhexanol und/oder 2-Propyl-4,4-dimethylpentanol, wobei die aliphatische oder aromatische Di- oder Tricarbonsäure ausgewählt ist aus der Gruppe bestehend aus Zitronensäure, Phthalsäure, Isophthalsäure, Terephthalsäure und Trimellitsäure,
wobei der Kleb- oder Dichtstoff keinen Benzoesäureisononylester enthält.

2. Kleb- oder Dichtstoff nach Anspruch 1, **dadurch gekennzeichnet, dass** dieser mindestens folgende Komponenten enthält
10 bis 90 Gew.-% Komponente (A)
3 bis 60 Gew.-% Komponente (B)
0 bis 80 Gew.-% Füllstoffe
0 bis 20 Gew.-% Rheologiemodifizierer.

3. Kleb- oder Dichtstoff nach Anspruch 1 oder 2, **dadurch gekennzeichnet, dass** die Komponente (B) mindestens einen Phthalsäureester eines 2-Propylheptanol-Isomeren enthält.

4. Kleb- oder Dichtstoff nach einem der Ansprüche 1 bis 3, **dadurch gekennzeichnet, dass** als weitere Komponenten Hilfs- und Zusatzstoffe, Dispergiermittel, Filmbildehilfsmittel, Pigmente, Rheologiehilfsmittel, Wasserfänger, Haftvermittler, Katalysatoren, Licht- und Alterungsschutzmittel, Flammschutzmittel, Lösemittel und/oder Biozide enthalten sind.

5. Kleb- oder Dichtstoff nach einem der Ansprüche 1 bis 4, **dadurch gekennzeichnet, dass** es sich um ein Einkomponentensystem handelt.

6. Kleb- oder Dichtstoff nach einem der Ansprüche 1 bis 4, **dadurch gekennzeichnet, dass** es sich um ein Zweikomponentensystem handelt.

7. Verfahren zur Herstellung eines Kleb- oder Dichtstoffes gemäß der Definition eines der Ansprüche 1 bis 6, **dadurch gekennzeichnet, dass**
a) ein Teil der Komponente (A) und optional mindestens eine Verbindung aus der Reihe Füllstoff, Thixotropiermittel, Antioxidans, UV-Absorber, zusammen mit der gesamten Komponente (B) vorgelegt wird,
b) optional mindestens eine Verbindung aus der Reihe Lösungsmittel und Haftvermittler und,
c) der Rest der Komponente (A) und optional weitere Komponenten, insbesondere aus der Reihe Füllstoffe, Thixotropiermittel, Antioxidans und UV-Absorber, Lösungsmittel und Haftvermittler zugesetzt wird,
wobei die Komponenten homogen gemischt werden.

8. Verfahren zur Herstellung eines Kleb- oder Dichtstoffes nach Anspruch 7, **dadurch gekennzeichnet, dass** das Verfahren diskontinuierlich durchgeführt wird.

9. Verfahren zur Herstellung eines Kleb- oder Dichtstoffes nach Anspruch 7, **dadurch gekennzeichnet, dass** das Verfahren kontinuierlich durchgeführt wird.

10. Verwendung des Kleb- oder Dichtstoffes gemäß der Definition eines der Ansprüche 1 bis 6 zur Herstellung von stoffschlüssigen Verbindungen zwischen Fügeteilen.

11. Verwendung des Kleb- oder Dichtstoffes nach Anspruch 10, zur Herstellung von stoffschlüssigen Verbindungen zwischen Fügeteilen aus Stein, Beton, Mörtel, Glas, Metall, Keramik, Kunststoff und/oder Holz.

12. Verwendung des Kleb- oder Dichtstoffes nach einem der Ansprüche 10 oder 11, **dadurch gekennzeichnet, dass** es sich bei den Fügeteilen zum einen um eine Oberfläche und zum anderen um einen Teppich-Belag, einen PVC-Belag, ein Laminat, einen Gummi-Belag, einen Kork-Belag, einen Linoleum-Belag, einen Holz-Belag oder Fliesen handelt.

13. Verwendung des Kleb- oder Dichtstoffes nach einem der Ansprüche 10 oder 11, **dadurch gekennzeichnet, dass** es sich bei der stoffschlüssigen Verbindung um eine Hochbaufuge, eine Dehnfuge, eine Bodenfuge, Fassadenfuge, Gebäudetrennfugen, Anschlussfugen, Verglasung, Fensterverglasung, Structural Glazing, Dachverglasung, Fensterversiegelung oder eine Dichtfuge im Sanitärbereich handelt.

14. Verwendung des Kleb- oder Dichtstoffes nach einem der Ansprüche 10 oder 11, **dadurch gekennzeichnet, dass** es sich bei den Fügeteilen um Teile im Elektro-, Maschinen-, Auto-, LKW-, Wohnwagen-, Zug-, Trailer-, Flugzeug-, Schiff-, und Gleisbau handelt.

## Claims

1. Adhesive or sealant comprising
(A) at least one compound selected from the group consisting of polyurethanes, polyureas, polyacrylates, aqueous polyacrylates, silicones, polysulphides, silylated polyurethanes, silylated polyureas, silylated polyethers, silylated polysulphides and silyl-terminated acrylates, and
(B) at least one ester of an aliphatic or aromatic dicarboxylic or tricarboxylic acid with a C₁₀ alcohol component comprising 2-propylheptanol, or a C₁₀ alcohol mixture comprising 2-propylheptanol and at least one of the C₁₀ alcohols 2-propyl-4-methylhexanol, 2-propyl-5-methylhexanol, 2-isopropylheptanol, 2-isopropyl-4-methylhexanol, 2-isopropyl-5-methylhexanol and/or 2-propyl-4,4-dimethylpentanol, the aliphatic or aromatic dicarboxylic or tricarboxylic acid being selected from the group consisting of citric acid, phthalic acid, isophthalic acid, terephthalic acid and trimellitic acid,
the adhesive or sealant containing no isononyl benzoate.

2. Adhesive or sealant according to Claim 1, **characterized in that** it comprises at least the following components:
10 to 90% by weight of component (A)
3 to 60% by weight of component (B)
0 to 80% by weight of fillers
0 to 20% by weight of rheology modifiers.

3. Adhesive or sealant according to Claim 1 or 2, **characterized in that** component (B) comprises at least one phthalic ester of a 2-propylheptanol isomer.

4. Adhesive or sealant according to any of Claims 1 to 3, **characterized in that** further components comprised are auxiliaries and additives, dispersants, film-forming assistants, pigments, rheological assistants, water scavengers, adhesion promoters, catalysts, light stabilizers, ageing inhibitors, flame retardants, solvents and/or biocides.

5. Adhesive or sealant according to any of Claims 1 to 4, **characterized in that** it is a one-component system.

6. Adhesive or sealant according to any of Claims 1 to 4, **characterized in that** it is a two-component system.

7. Process for preparing an adhesive or sealant as defined in any of Claims 1 to 6, **characterized in that**
a) a portion of component (A) and optionally at least one compound from the series consisting of filler, thixotropic agent, antioxidant and UV absorber is introduced together with all of component (B),
b) optionally at least one compound from the series consisting of solvent and adhesion promoter, and
c) the remainder of component (A) and optionally of further components, especially from the series consisting of fillers, thixotropic agent, antioxidant and UV absorber, solvent and adhesion promoter, are added,
the components being mixed homogeneously.

8. Process for preparing an adhesive or sealant according to Claim 7, **characterized in that** the process is carried out discontinuously.

9. Process for preparing an adhesive or sealant according to Claim 7, **characterized in that** the process is carried out continuously.

10. Use of the adhesive or sealant as defined in any of Claims 1 to 6 for producing material bonds between parts to be joined.

11. Use of the adhesive or sealant according to Claim 10, for producing material bonds between parts to be joined made of stone, concrete, mortar, glass, metal, ceramic, plastic and/or wood.

12. Use of the adhesive or sealant according to either of Claims 10 and 11, **characterized in that** one of the parts to be joined is a surface and the other is a carpet covering, a PVC covering, a laminate, a rubber covering, a cork covering, a linoleum covering, a wood covering or tiles.

13. Use of the adhesive or sealant according to either of Claims 10 and 11, **characterized in that** the material bond is a construction joint, an expansion joint, a flooring joint, a façade joint, building partition joints, flashing joints, glazing, window glazing, structural glazing, roof glazing, window sealing or a sealed joint in the sanitary sector.

14. Use of the adhesive or sealant according to either of Claims 10 and 11, **characterized in that** the parts to be joined are parts in electrical, mechanical, automotive, lorry, caravan, train, trailer, aircraft, watercraft and railway construction.

## Revendications

1. Adhésif ou matériau d'étanchéité, contenant
(A) au moins un composé choisi dans le groupe des polyuréthanes, des polyurées, des polyacrylates, des polyacrylates aqueux, des silicones, des polysulfures, des polyuréthanes silylés, des polyéthers silylés, des polysulfures silylés et des acrylates terminés par silyle et
(B) au moins un ester d'un acide dicarboxylique ou tricarboxylique aliphatique ou aromatique avec un composé C₁₀-alcool contenant le 2-propylheptanol ou un mélange de C₁₀-alcools de 2-propylheptanol et d'au moins un des C₁₀-alcools 2-propyl-4-méthylhexanol, 2-propyl-5-méthylhexanol, 2-isopropylheptanol, 2-isopropyl-4-méthylhexanol, 2-isopropyl-5-méthylhexanol et/ou 2-propyl-4,4-diméthylpentanol, l'acide dicarboxylique ou tricarboxylique aliphatique ou aromatique étant choisi dans le groupe constitué par l'acide citrique, l'acide phtalique, l'acide isophtalique,
l'acide téréphtalique et l'acide trimellitique, l'adhésif ou le matériau d'étanchéité ne contenant pas d'ester isononylique de l'acide benzoïque.

2. Adhésif ou matériau d'étanchéité selon la revendication 1, **caractérisé en ce que** celui-ci contient au moins les composants suivantes :
10 à 90% en poids de composant (A),
3 à 60% en poids de composant (B),
0 à 80% en poids de charges,
0 à 20% d'agent de modification de la rhéologie.

3. Adhésif ou matériau d'étanchéité selon la revendication 1 ou 2, **caractérisé en ce que** le composant (B) contient au moins un ester d'acide phtalique d'un isomère du 2-propylheptanol.

4. Adhésif ou matériau d'étanchéité selon au moins l'une quelconque des revendications 1 à 3, **caractérisé en ce qu'**il contient, comme autres composants, des adjuvants et des additifs, des dispersants, des adjuvants filmogènes, des pigments, des adjuvants de rhéologie, des pièges d'eau, des promoteurs d'adhérence, des catalyseurs, des agents de protection contre la lumière et le vieillissement, des agents ignifuges, des solvants et/ou des biocides.

5. Adhésif ou matériau d'étanchéité selon au moins l'une quelconque des revendications 1 à 4, **caractérisé en ce qu'**il s'agit d'un système à un composant.

6. Adhésif ou matériau d'étanchéité selon au moins l'une quelconque des revendications 1 à 4, **caractérisé en ce qu'**il s'agit d'un système à deux composants.

7. Procédé pour la préparation d'un adhésif ou d'un matériau d'étanchéité selon la définition d'une quelconque des revendications 1 à 6, **caractérisé en ce que**
a) on dispose au préalable une partie du composant (A) et éventuellement au moins un composé de la série charge, agent thixotropique, antioxydant, absorbant des UV, ensemble avec tout le composant (B),
b) éventuellement au moins un composé de la série solvant et promoteur d'adhérence et
c) le reste du composant (A) et éventuellement d'autres composants, en particulier de la série charges, agent thixotropique, antioxydant et absorbant des UV, solvant et promoteur d'adhérence,
les composants étant mélangés de manière homogène.

8. Procédé pour la préparation d'un adhésif ou d'un matériau d'étanchéité selon la revendication 7, **caractérisé en ce que** le procédé est réalisé de manière discontinue.

9. Procédé pour la préparation d'un adhésif ou d'un matériau d'étanchéité selon la revendication 7, **caractérisé en ce que** le procédé est réalisé en continu.

10. Utilisation de l'adhésif ou du matériau d'étanchéité selon la définition de l'une quelconque des revendications 1 à 6, pour la réalisation d'assemblages par liaison de matière entre des pièces à assembler.

11. Utilisation de l'adhésif ou du matériau d'étanchéité selon la revendication 10, pour la réalisation d'assemblages par liaison de matière entre des pièces à assembler en pierre, en béton, en mortier, en verre, en métal, en céramique, en matériau synthétique et/ou en bois.

12. Utilisation de l'adhésif ou du matériau d'étanchéité selon l'une quelconque des revendications 10 ou 11, **caractérisée en ce qu'**il s'agit, pour les pièces à assembler, d'une part d'une surface et d'autre part d'un revêtement en tapis, en PVC, d'un stratifié, d'un revêtement en caoutchouc, d'un revêtement en liège, en linoléum, en bois ou de carreaux.

13. Utilisation de l'adhésif ou du matériau d'étanchéité selon l'une quelconque des revendications 10 ou 11, **caractérisée en ce qu'**il s'agit, pour l'assemblage par liaison de matière, d'un joint de construction haute, d'un joint de dilatation, d'un joint de sol, d'un joint de façade, de joints de séparation de bâtiments, de joints de raccordement, d'un vitrage, d'un panneau de hublot, de verre structurel, de vitrages de toit, d'un scellage de fenêtre ou d'un joint d'étanchéité dans le domaine sanitaire.

14. Utilisation de l'adhésif ou du matériau d'étanchéité selon l'une quelconque des revendications 10 ou 11, **caractérisée en ce qu'**il s'agit, pour les pièces à assembler, de pièces dans la construction électrique, de machines, de voitures, de camions, de motor-homes, de trains, de remorques, d'avions, de bateaux et de rails.
